# EUROPÄISCHE PATENTSCHRIFT

(11) **EP 1 604 490 B1**
(45) Veröffentlichungstag und Bekanntmachung des Hinweises auf die Patenterteilung: **03.02.2016**
(21) Anmeldenummer: 04710329.6
(22) Anmeldetag: 12.02.2004
(51) Int. Cl.: H04W 12/08, H04W 28/00, H04L 12/28

(54) **VERFAHREN UND ANORDNUNG ZUM EXTERNEN STEUERN UND VERWALTEN WENIGSTENS EINES EINEM LOKALEN FUNKNETZ ZUGEORDNETEN WLAN-TEILNEHMERS**
METHOD AND ARRANGEMENT FOR EXTERNALLY CONTROLLING AND MANAGING AT LEAST ONE WLAN SUBSCRIBER WHO IS ASSIGNED TO A LOCAL RADIO NETWORK
PROCEDE ET DISPOSITIF DE COMMANDE ET DE GESTION EXTERNES D'AU MOINS UN ABONNE DE RESEAU LOCAL SANS FIL ASSOCIE A UN RESEAU RADIO LOCAL

(30) Priorität: 10.03.2003 DE 10311580; 23.09.2003 DE 10345015
(43) Veröffentlichungstag der Anmeldung: 14.12.2005
(73) Patentinhaber: Deutsche Telekom AG, 53113 Bonn (DE)
(72) Erfinder: MOHRI, Alexander, 15831 Mahlow (DE); VATER, Helge, 14532 Stahnsdorf (DE); KNUTH, Michael, 16727 Oberkämer (DE); MOLZAHN, Matthias, 13503 Berlin (DE); HENKELS, Christoph, 60437 Frankfurt/Main (DE)
(74) Vertreter: Klinski, Robert
(86) Internationale Anmeldenummer: PCT/DE2004/000190
(87) Internationale Veröffentlichungsnummer: WO 2004/082209

(56) Entgegenhaltungen:
- WO-A-01/76297
- GB-A- 2 379 124
- ALA-LAURILA J ET AL: "WIRELESS LAN ACCESS NETWORK ARCHITECTURE FOR MOBILE OPERATORS" IEEE COMMUNICATIONS MAGAZINE, IEEE SERVICE CENTER. PISCATAWAY, N.J, US, Bd. 39, Nr. 11, November 2001 (2001-11), Seiten 82-89, XP001107810 ISSN: 0163-6804
- PATENT ABSTRACTS OF JAPAN vol. 2003, no. 06, 3. Juni 2003 (2003-06-03) & JP 2003 060651 A (IVYNETWORK CO LTD;NTT SOFTWARE CORP), 28. Februar 2003 (2003-02-28)
- DATABASE WPI Derwent Publications Ltd., London, GB; AN 2002-688141 XP002284654 & KR 2002 035 530 A (TRIGEN INFONET INC) 11. Mai 2002 (2002-05-11)

## Beschreibung

Die Erfindung betrifft ein Verfahren zum externen Steuern und Verwalten wenigstens eines, wenigstens einem lokalen Funknetz (Wireless Local Area Network; WLAN) zugeordneten WLAN-Teilnehmers, der über ein öffentliches TCP/IP-Netz Dienste anfordern kann. Die Erfindung betrifft ferner eine Anordnung aus mehreren Kommunikationsnetzen insbesondere zur Durchführung des Verfahrens sowie eine Steuer- und Verwaltungseinrichtung zum Einsatz in einer solchen Netzwerkanordnung.

Ala-Laurila, et. al.: "Wireless LAN Access Network Architecture for Mobile Operators", November 2001 (2001-11), XP001107810, beschreibt eine WLAN Architektur. Diese kombiniert die WLAN Zugangstechnologie mit SIM-basierten Teilnehmerverwaltungsfunktionen und Roaming Infrastruktur.

Die internationale Offenlegungsschrift WO 01/76297 A1 beschreibt ein Abrechnungsverfahren , das zur Authentifizierung und Abrechnung von mobilen Teilnehmern bei Verbindung zum Internet genutzt werden kann, wobei im Vordergrund das Abrechnungsverfahren steht. Der WLAN-Teilnehmer fordert einen Dienst zur Internetnutzung an. Bevor die Verbindung aufgebaut wird, muss der Teilnehmer sich erfolgreich authentifizieren. Die Abrechnung basiert auf seiner Benutzeridentität.

Die Offenlegungsschrift GB 2379124 A nennt eine Vorrichtung, ein sogenannter WLAN Access Point, der die erhaltenen Datenpakete so konfiguriert, dass sie nur zu erlaubten Netzwerkgeräten im Netz übertragen werden. Dafür enthält die Vorrichtung eine Liste mit Klassifikatoren der erlaubten Netzgeräte.

Im Zuge der raschen Verbreitung von lokalen Funknetzen, nachfolgend auch kurz WLANs genannt, und deren Anbindung an das Internet ist es ähnlich der Situation im öffentlichen Fernsprechnetz sinnvoll, Maßnahmen zu ergreifen, damit Systemerweiterungen und das Integrieren neuer Leistungsmerkmale und Dienste einfach, flexibel und schnell durchgeführt werden können. Der Programmierungsaufwand bei der Integration neuer Dienste soll ebenfalls klein gehalten werden.

Ein Kerngedanke der Erfindung ist darin zu sehen, bei Anforderung eines Internet-Dienstes durch einen WLAN- Teilnehmer die entsprechende Verbindungs- und Dienststeuerung von einer externen Einrichtung durchführen und verwalten zu lassen. Dabei soll eine Überlastung des Systems erkannt werden.

Das oben angesprochene technische Problem löst die Erfindung zum einen mit den Verfahrensschritten des Anspruchs 1.

Danach ist ein Verfahren zum externen Steuern und Verwalten wenigstens eines, wenigstens einem lokalen Funknetz (Wireless Local Area Network; WLAN) zugeordneten WLAN-Teilnehmers vorgesehen, der über ein öffentliches TCP/IP-Netz Dienste anfordern kann. Es sind wenigstens ein lokales Funknetz über wenigstens eine Schnittstellen-Einrichtung, im Folgenden auch Access Cube genannt, sowie eine externe Steuer- und Verwaltungseinrichtung mit dem öffentlichen TCP/IP-Netz verbunden sind. Das Verfahren weist folgend Schritte auf: Ein WLAN-Teilnehmer fordert einen Dienst an; die Berechtigung des Zugangs des Dienste-anfordernden WLAN- Teilnehmers zum TCP/IP-Netz wird geprüft; eine Verbindung wird über das TCP/IP-Netz zum WLAN-Teilnehmer hergestellt, wenn der WLAN-Teilnehmer eine Zugangsberechtigung zum TCP/IP-Netz besitzt; und Signalisierungs- und/oder Informationsdaten werden über das TCP/IP-Netz zur externen Steuer- und Verwaltungseinrichtung übertragen und verwaltet. Dabei wird der Auslastungsgrad wenigstens eines lokalen Funknetzes in der externen Steuer- und Verwaltungseinrichtung (90) erfasst und protokolliert, so dass in Abhängigkeit des Auslastungsgrades einem Dienste-anfordernden WLAN-Teilnehmer die Zugangsberechtigung zum TCP/IP-Netz zumindest vorübergehend verweigert werden kann.

An dieser Stelle sei angemerkt, dass es sich bei dem öffentlichen TCP/IP-Netz um das Internet und bei einem WLAN-Teilnehmer um ein Endgerät, wie zum Beispiel ein Notebook oder einen Personal Computer mit einer WLAN-Karte handeln kann. Bei der Steuer- und Verwaltungseinrichtung kann es sich um eine Nomads Plattform handeln, die alle Anforderungen eines WLAN-Netzes abdecken soll. Dienste im Sinne der Erfindung sind zum Beispiel der Voice over IP Dienst und alle über Internet Service Provider verfügbare Dienste.

Vorteilhafte Weiterbildungen sind Gegenstand der Unteransprüche.

Ein vorteilhaftes Merkmal der Erfindung ist darin zu sehen, dass die hinsichtlich eines Dienste-anfordernden WLAN-Teilnehmers anfallenden zeit- und/oder volumenabhängigen Abrechnungsdaten in der Steuer- und Verwaltungseinrichtung gesammelt werden, um daraus entsprechenden Abrechnungsdatensätze zu erzeugen. Die Abrechnungsdatensätze können dann als Dateien abgespeichert und weiterverarbeitet werden.

Bevor ein Dienste-anfordernder WLAN-Teilnehmer Zugang zum TCP/IP-Netz erhält, muss geprüft werden, ob er überhaupt eine Zugangsberechtigung besitzt. Diese Prüfung kann zunächst in einer Schnittstellen-Einrichtung erfolgen, die dem lokalen Funknetz, in dessen Versorgungsbereich sich der WLAN-Teilnehmer befindet, zugeordnet ist. Ist der Dienstanfordernde WLAN-Teilnehmer hinsichtlich dieser Schnittstellen-Einrichtung bereits freigeschaltet, wird eine Verbindung vom WLAN-Teilnehmer zu dem Diensteanbieter, auch Service Provider oder speziell Internet Service Provider genannt, über das öffentliche TCP/IP-Netz hergestellt. Die Steuerung und Überwachung der Verbindung übernimmt die Steuer- und Verwaltungseinrichtung.

Ist jedoch der Dienste-anfordernde WLAN-Teilnehmer hinsichtlich dieser Schnittstellen-Einrichtung noch nicht freigeschaltet worden, werden folgende Verfahrensschritte durchgeführt:
Wenigstens eine individuelle Kennung, insbesondere die MAC (Medium Access Control)-Adresse und/oder die IP-Adresse des Dienste-anfordernden WLAN-Teilnehmers werden zur externen Steuer-und Verwaltungseinrichtung übertragen;
unter Ansprechen auf die individuelle Kennung wird in der externen Steuer- und Verwaltungseinrichtung geprüft, ob dem Dienste-anfordernden WLAN-Teilnehmer bereits eine Zugangsberechtigung erteilt worden ist; und
eine Verbindung wird über das TCP/IP-Netz hergestellt, wenn der WLAN-Teilnehmer eine Zugangsberechtigung zum TCP/IP-Netz besitzt. Dieses Prozedere, bei dem die Zugangsberechtigung eines Dienste-anfordernden WLAN-Teilnehmers zentral in der Steuer- und Verwaltungseinrichtung erteilt und verwaltet wird, wird auch Authentifizierung genannt. Dieses Verfahren ermöglicht einem freigeschalteten WLAN-Teilnehmer sich zwischen verschiedenen Schnittstellen-Einrichtungen desselben lokalen Funknetzes oder anderer lokaler Funknetze zu bewegen, was auch als Roaming bezeichnet wird, ohne dass bei jedem Wechsel einer Schnittstellen-Einrichtung eine erneute Authentifizierung stattfinden muss.

Ist der Dienste-anfordernde WLAN-Teilnehmer weder in der Schnittstellen-Einrichtung noch in der Steuer- und Verwaltungseinrichtung registriert, das heißt, dass diesem WLAN-Teilnehmer ist noch keine Zugangsberechtigung erteilt worden, wird der WLAN-Teilnehmer aufgefordert, seine Authentifizierungsdaten einzugeben. Der WLAN-Teilnehmer erhält nach Eingabe der Authentifizierungsdaten eine, möglicherweise eingeschränkte Zugangsberechtigung zum TCP/IP-Netz. Die Authentifizierungsdaten können als Informationsdaten die MAC- und die IP-Adresse des WLAN-Teilnehmers enthalten.

Um zum Beispiel Betrugsfälle aufdecken zu können, wird in der Steuer- und Verwaltungseinirchtung eine Authorisierung des frei geschalteten WLAN-Teilnehmers durchgeführt. Hierbei wird zum Beispiel geprüft, ob der WLAN-Teilnehmer im Falle eines Prepaid-Kunden noch ein Guthaben besitzt, oder den angeforderten Dienst überhaupt nutzen darf. Diese Funktionalität wird in der Beschreibung auch als Fraud-Management bezeichnet.

An dieser Stelle sei erwähnt, dass ein lokales Funknetz, welches Schnittstellen-Einrichtungen und Netz-Zugangspunkte, auch Access Points genannt, enthält, in einer sogenannten Lokation, welche ein Raum oder auch Gebäude sein kann, implementiert ist. Eine Lokation bildet zusammen mit dem darin implementierten lokalen Funknetz einen Hotspot.

Um eine Überlastung des System erkennen zu können, wird der Auslastungsgrad wenigstens eines lokalen Funknetzes in der externen Steuer- und Verwaltungseinrichtung erfasst und protokolliert, so dass in Abhängigkeit des Auslastungsgrades einem Dienste-anfordernden WLAN-Teilnehmers die Zugangsberechtigung zum TCP/IP-Netz zumindest vorübergehend verweigert werden kann.

Um die Auslastung der lokalen Funknetze erkennen zu können werden in der externen Steuer- und Verwaltungseinrichtung die Kennung und/oder der Inhaber wenigstens einiger lokaler Funknetze und/oder die Adresse der jedem lokalen Funknetz zugeordneten Schnittstellen-Einrichtungen gespeichert. Gleichbedeutend zur der Kennung oder dem Inhaber eines lokalen Funknetzes ist die Kennung oder der Inhaber der entsprechenden Lokation oder des entsprechenden Hotspots, in dem das lokale Funknetz implementiert ist. Zusätzlich wird in der externen Steuer- und Verwaltungseinrichtung eine Tabelle verwaltet, in der jedem Dienste-anfordernden WLAN-Teilnehmer, dem eine Zugangsberechtigung erteilt worden ist, die Kennung und/oder der Inhaber des lokalen Funknetzes und/oder die Adresse der dem lokalen Funknetz zugeordneten Schnittstellen-Einrichtung zugewiesen, an der der WLAN-Teilnehmer augenblicklich angemeldet ist. Die Verwaltung dieser Daten kann in einer Einrichtung erfolgen, die in der detaillierten Beschreibung als WLAN Inventory Modul bezeichnet wird.

Um einem Dienste-anfordernden WLAN-Teilnehmer die erstmalige Systemanmeldung zu erleichtern, können für wenigstens ein lokales Funknetz und/oder wenigstens einen WLAN-Teilnehmer in der externen Steuer- und Verwaltungseinrichtung eine individuelle Webseite, beispielsweise in Form einer Benutzeroberfläche oder eines Anmeldeformulars abgelegt werden, die einem Dienste-anfordernden WLAN-Teilnehmer übermittelt werden kann.

Um genaue Abrechnungsdatensätze für eine kostenpflichtige Verbindung erzeugen zu können, ist es erforderlich, den Zahlungstyp des Dienste-anfordernden WLAN-Teilnehmers zu kennen. Handelt es sich beispielsweise um eine Teilnehmer, der für die Nutzung von Diensten über das öffentliche TCP//IP-Netz im Voraus bezahlt hat (Voucher), wird vor der Freischaltung geprüft, ob der Dienste-anfordernde WLAN-Teilnehmer über ein Guthaben verfügt, und dass, wenn ja, eine hergestellte Verbindung getrennt oder keine Verbindung hergestellt wird, wenn das Guthaben aufgebraucht worden ist.

Das oben genannte technische Problem wird ferner durch eine Anordnung aus mehreren Kommunikationsnetzen nach Anspruch 12 gelöst. Hierzu weist die Anordnung wenigstens ein lokales Funknetz (Wireless Local Area Network; WLAN), welches über wenigstens eine Schnittstellen-Einrichtung mit einem öffentlichen TCP/IP-Netz verbunden ist, wenigstens einen WLAN-Teilnehmer und
eine dem öffentlichen TCP/IP-Netz zugeordnete Steuer- und Verwaltungseinrichtung auf. Die Schnittstelleneinrichtung und die Steuer- und Verwaltungseinrichtung weisen Einrichtungen zum Austauschen von Signalisierungs- und/oder Informationsdaten über das öffentliche TCP/IP-Netz auf, wobei die Schnittstelleneinrichtung und/oder die Steuer- und Verwaltungseinrichtung jeweils eine Prüfeinrichtung zum Prüfen der Zugangsberechtigung eines Dienste-anfordernden WLAN-Teilnehmers zum öffentlichen TCP/IP-Netz aufweisen. Die Steuer- und Verwaltungseinrichtung weist ferner eine Einrichtung zum Steuern der Herstellung einer Verbindung über das öffentliche TCP/IP-Netz zum Dienste-anfordernden WLAN-Teilnehmer auf, und zwar in Abhängigkeit davon, dass der WLAN-Teilnehmer eine Zugangsberechtigung zum TCP/IP-Netz besitzt.

Vorteilhafte Weiterbildungen sind Gegenstand der Unteransprüche.

Die Anordnung ist dadurch gekennzeichnet, dass die Signalisierungsdaten Abrechnungsdaten enthalten und dass die Steuer- und Verwaltungseinrichtung eine Einrichtung zum Erzeugen von Abrechnungsdatensätzen aus den Abrechnungsdaten und eine Einrichtung zum Weiterleiten der Abrechnungsdatensätze zu einer Abrechnungseinheit aufweist.

Die Anordnung ist weiterhin dadurch gekennzeichnet, dass die Schnittstellen-Einrichtung eine Einrichtung zum Übertragen wenigstens einer individuellen Kennung, insbesondere der MAC-Adresse und/oder der IP-Adresse eines Dienste-anfordernden WLAN-Teilnehmers zur externen Steuer-und Verwaltungseinrichtung aufweist, wobei
die Prüfeinrichtung der Steuer- und Verwaltungdseinrichtung unter Ansprechen auf die individuelle Kennung prüfen kann, ob dem Dienste-anfordernden WLAN-Teilnehmer bereits eine Zugangsberechtigung erteilt worden ist.

Vorzugsweise weist die Steuer- und Verwaltungseinrichtung eine Einrichtung zum Speichern einer individuellen Webseite für wenigstens ein lokales Funknetz und/oder für wenigstens einen WLAN-Teilnehmer sowie eine Einrichtung zum Übermitteln einer Webseite zu einem Dienste-anfordernden WLAN-Teilnehmer auf.

Der Prüfeinrichtung der Steuer- und Verwaltungseinrichtung kann eine Einrichtung zum Prüfen der Authorisierung eines Dienste-anfordernden WLAN-Teilnehmers zugeordnet sein, um zum Beispiel die in der Beschreibung erläuterte Betrugs- oder Fraudverwaltung durchzuführen.

Die Steuer- und Verwaltungseinrichtung kann zu diesem Zweck eine Einrichtung zum Speichern der Kennung und/oder des Inhabers eines lokalen Funknetzes und/oder der Adresse der dem lokalen Funknetz zugeordneten Schnittstellen-Einrichtungen aufweisen. Ferner kann sie eine Einrichtung zum Verwalten einer Tabelle enthalten, in der jedem Diensteanfordernden WLAN-Teilnehmer, dem eine Zugangsberechtigung erteilt worden ist, die Kennung und/oder der Inhaber des lokalen Funknetzes und/oder die Adresse der dem lokalen Funknetz zugeordneten Schnittstellen-Einrichtung zugewiesen ist, an der der WLAN-Teilnehmer augenblicklich angemeldet ist.

Zudem kann die Steuer- und Verwaltungseinrichtung eine Einrichtung zum Erfassen des Auslastungsgrades wenigstens eines lokalen Funknetzes und eine Sperreinrichtung aufweisen, die in Abhängigkeit des Auslastungsgrades einem Dienste-anfordernden WLAN-Teilnehmers die Zugangsberechtigung zum TCP/IP-Netz verweigern kann.

Um genaue Abrechnungsdatensätze erzeugen zu können, weist die Steuer- und Verwaltungseinrichtung eine Einrichtung zum Ermitteln des Zahlungstyps eines Dienste-anfordernden WLAN-Teilnehmers auf.

Um Änderungen an der Anordnung zum Beispiel durch das Anbinden eines weiteren lokalen Funknetzes schnell vornehmen, neue Dienste ohne größeren Aufwand anbieten und die Sicherheit der Anordnung verbessern zu können, ist die Steuer- und Verwaltungseinrichtung als Computernetz ausgebildet. Die Einrichtungen oder Funktionalitäten der Steuer- und Verwaltungseinrichtung, die durch Hardware- und/oder Softwarekomponenten realisiert sind, sind auf bestimmte Rechner des Rechnernetzes verteilt.

An dieser Stelle sei erwähnt, dass in der Beschreibung der Begriff "Modul" häufig für die Begriffe Rechner, Einrichtung oder Funktionalität verwendet wird.

Gemäß einer bevorzugten Ausführungsform umfasst die Anordnung wenigstens einen ersten Rechner, in der Beschreibung auch Kernel Modul genannt, in dem die Prüfeinrichtung, die Einrichtung zum Erzeugen von Abrechnungsdatensätzen, die Einrichtung zum Erfassen des Auslastungsgrades wenigstens eines lokalen Funknetzes, die Sperreinrichtung und die Einrichtung zum Ermitteln des Zahlungstyps implemetiert ist. Ferner ist wenigstens ein zweiter Rechner, in der Beschreibung auch View Modul genannt, in dem die Einrichtung zum Speichern individueller Webseiten und die Einrichtung zum Übermitteln einer Webseite zu einem Dienste-anfordernden WLAN-Teilnehmer implementiert ist, und
wenigstens ein dritter Rechner, nachfolgend auch BSS (Business Support Service)-Modul genannt, vorgesehen, in dem unter anderem die Abrechnungseinheit implementiert ist.

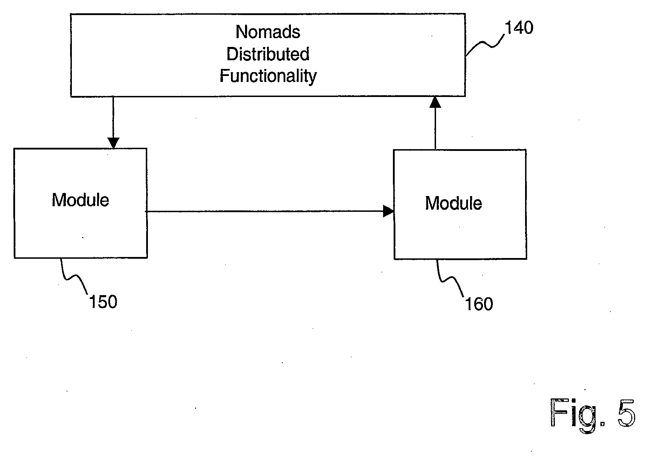

Die Steuer- und Verwaltungseinrichtung kann eine Einrichtung zum Überwachen und Verwalten der Rechner und der Verteilung der Einrichtungen oder Funktionalitäten der Steuer- und Verwaltungseinrichtung auf den Rechnern aufweisen. Diese Einrichtung wird in der detaillierten Beschreibung als NDF (No ads Distribution Functionality; Nomads Verteilungsfunktionalitäts) -Modul bezeichnet. Siehe hierzu auch Fig. 5.

Das oben geschilderte technische Problem wird ebenfalls durch eine Steuer- und Verwaltungseinrichtung gelöst, die zum Einsatz in einer Anordnung aus mehreren Kommunikationsnetzen gemäß einem der Ansprüche 12 bis 22 geeignet ist.

Die Erfindung wird nachfolgend anhand eines Ausführungsbeispiels in Verbindung mit den beiliegenden Zeichnungen näher erläutert. Es zeigen:
- Fig. 1: eine schematische Darstellung einer Anordnung aus zwei lokalen Funknetzen und dem Internet, in der die Erfindung verwirklicht ist,
- Fig. 2: eine vereinfachte Darstellung des in Fig. 1 gezeigten Steuer- und Verwaltungsnetzwerks,
- Fig. 3: eine Detailansicht des Kernel-Moduls des in Fig. 2 gezeigten Steuer- und Verwaltungsnetzwerks,
- Fig. 4: ein Blockschaltbild des in Fig. 2 gezeigten BSS-Moduls,
- Fig. 5: eine schematische Darstellung des NFD-Moduls,
- Fig. 6: den Signalisierungs- und Informationsablauf zwischen dem WLAN-Teilnehmer, dem Access Cube und dem Steuer- und Verwaltungsnetzwerk, und
- Fig. 7: den Informationsfluss innerhalb des Steuer- und Verwaltungsnetzwerks.

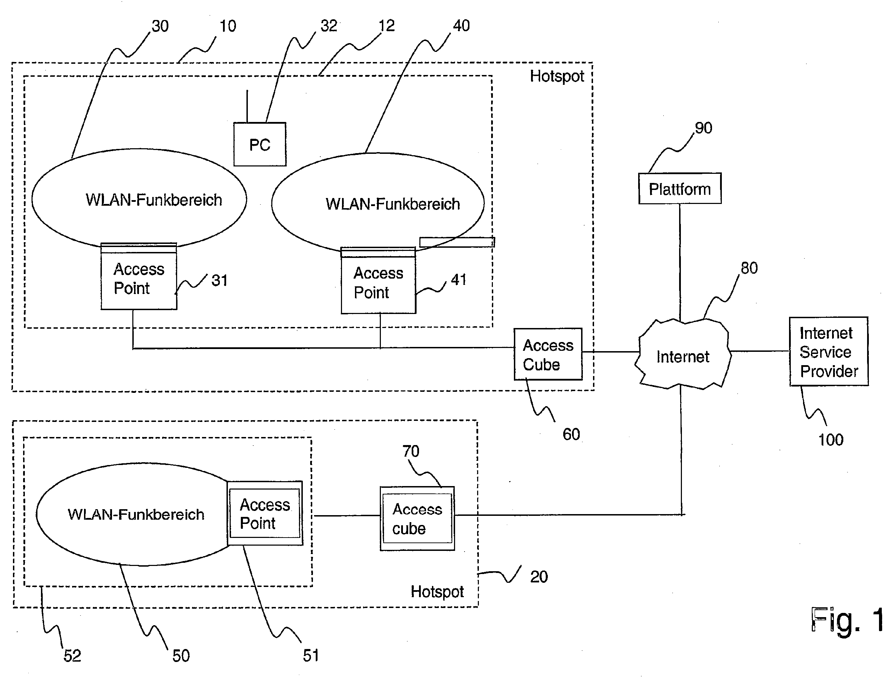

Fig. 1 zeigt eine beispielhafte Netzwerkanordnung, in der die Erfindung verwirklicht ist. Die Netzwerkanordnung weist ein erstes lokales Funknetz 12 auf, welches auch als WLAN (Wireless Local Area Network) bezeichnet wird. Das WLAN 12 verfügt über zwei Zugangspunkte 31 und 41, die jeweils ein WLAN-Funkbereich 30 bzw. 40 versorgen. Die Zugangspunkte 31 und 32 werden auch Access Points genannt. Die Zugangspunkte 31 und 41 sind mit einer WLAN-Internet-Schnittstelle 60 verbunden, die im Folgenden auch Access Cube oder Nomads Access Cube genannt wird. Über den Access Cube 60 kann das WLAN 12 mit einem öffentlichen TCP/IP- Netz, im vorliegenden Fall dem Internet 80 verbunden werden. Innerhalb des WLAN 12 befindet sich eine WLAN-Teilnehmer 32, welcher beispielsweise ein Notebook mit einer WLAN-Karte ist. Das WLAN 12, die Zugangspunkte 31 und 41 sowie der Access-Cube 60 bilden einen sogenannten Hotspot 10 oder eine sogenannte Lokation, welche zum Beispiel ein Hotel sein kann. In diesem Fall können die Zugangspunkte 31 und 41 in verschiedenen Zimmern des Hotels angeordnet sein.

Ein weiteres lokales Funknetz 52 umfasst einen Zugangspunkt 51 und den dazugehörenden WLAN-Funkbereich 50. Der Zugangspunkt 51 ist mit einer WLAN-Internet-Schnittstelle 70, auch Access Cube genannt, verbunden. Über den Access Cube 70 kann das WLAN 52 mit dem Internet 80 verbunden werfen. WLAN 52 und der Access Cube 70 bilden einen Hotspot 20 oder Lokation 20. Der Hotspot 20 kann ein Restaurant sein. Dem Internet 80 ist eine Steuer- und Verwaltungseinrichtung 90 zugeordnet, welche im Folgenden auch Nomads-Plattform genannt wird. Beispielhaft ist ein Internet Service Provider 100 in Fig. 1 dargestellt, dessen Dienste zum Beispiel vom Nutzer des Notebooks 32 unter Zwischenschaltung der Nomads-Plattform 90 über das Internet 80 angefordert werden können.

Die Access-Cubes 60 und 70 existieren in zwei verschiedenen Ausführungen. Eine Variante arbeitet hierbei als transparente Brücke oder Bridge, wird also nach dem sieben Schichtenmodell oder nach dem DOD-Modell in der Ebene 2 eingeordnet. Sie kann auch als L2 (Layer 2) Access-Cube bezeichnet werden. Diese Ausführung kann die Standardkomponente sein, wenn weitergehende Anforderungen bzgl. des Management von WLAN-Nutzern existieren. Darüber hinaus gibt es auch einen IPbasierenden Access-Cube, der aus diesem Grunde auch als L3 (Layer 3) Access-Cube bezeichnet wird.

Die L2-Ausführung der Access-Cubes 60 und 70 arbeitet bezüglich der Steuerung der Verbindung auf der Ebene des Layers 2. Dies hat einige Auswirkungen auf die Architektur in den umgesetzten Netzwerkinfrastrukturen:
- Wenn der Access-Cube als transparente Bridge arbeitet, wird die eigentliche Verbindung zwischen einem WLAN-Teilnehmer und dem aufgerufenen Service diesen Access-Cube auf der IP-Ebene nicht betrachtet.
- Unter der Voraussetzung dass die eingesetzten MAC-Adressen in der WLAN-Karte des WLAN-Teilnehmers 32 nicht verändert werden kann, kann durch die Speicherung der MAC-Adresse in der Plattform 90 auch bei einer Bewegung des WLAN-Teilnehmers 32 im lokalen oder kostenfreien Contentbereich der Plattform 90 dessen Bewegungsspur aufgezeichnet werden. Vielfältige Betrugs- oder Frauderkennungsmechanismen bauen auf der Speicherung dieser Daten auf.

Nomads steht für eine Plattform , die ähnlich einem GSM-Netz oder anderen Netzstrukturen wie dem Intelligenten Netz alle Anforderungen für den WLAN-Bereich abdecken soll. WLAN-Hotspot Einrichtungen werden von verschiedenen Herstellern angeboten. Die Verfügbarkeit dieser Produkte lässt eine Verbreitung in verschiedenen Preisklassen erwarten, so dass ein WLAN-Hotspot Betreiber die entsprechende Technologie nach gewissen Preis/Leistungsgesichtpunkten auswählen kann. Die Nomads Plattform 90 unterstützt alle WLAN-Hersteller, da sie im Hintergrund zum Beispiel die Hotspots 10 und 20 über ein TCP/IP Netzwerk verbindet. Diese Integration wird durch eine dezentrale Komponente realisiert, die jeweils an der Stelle der WLAN-Hotspots 10 und 20 aufgebaut wird, wo der Übergang in das öffentliche TCP/IP Netzwerk 80 erfolgt.

Bei der dezentralen Nomadskomponente handelt es sich um die Access Cubes 60 und 70. Die Access Cubes 60 und 70 liefern die notwendigen Daten, damit die Anforderungen aus den WLAN-Funkbereichen 30, 40 und 50 auf der Nomads Plattform 90 realisiert werden können. Wie Fig. 1 zeigt, werden die Access Cubes 60 und 70 über das öffentliche TCP/IP-Netzwerk 80 an die Nomads-Plattform 90 angeschlossen. Die Verbindung kann dabei durch verschiedene Verschlüsselungsverfahren geschützt werden , so dass der Informationsaustausch zwischen den Access Cubes 60 und 70 und der zentralen Nomads Plattform 90 geschützt wird.
Als Verschlüsselsungstechnologien können zum Beispiel die SSL (Secure Socket Layer)-, VPN (Virtual Private Network)- oder die IPSec-Technologie angewendet werden.

Zum weiteren Verständnis bzw. für die Abgrenzung zu anderen Architekturen, sei an dieser Stelle erwähnt, dass der Kommunikationsweg von Nutzdaten, das sind die eigentlichen Informationen, zwischen dem WLAN-Teilnehmer 32 und dem entsprechenden Service Provider 100 direkt über das Internet 80 führt, während Signalisierungsdaten zwischen den Nomads Access-Cubes 60 und 70 und der Nomads Plattform 90 über das Internet 80 ausgetauscht werden.

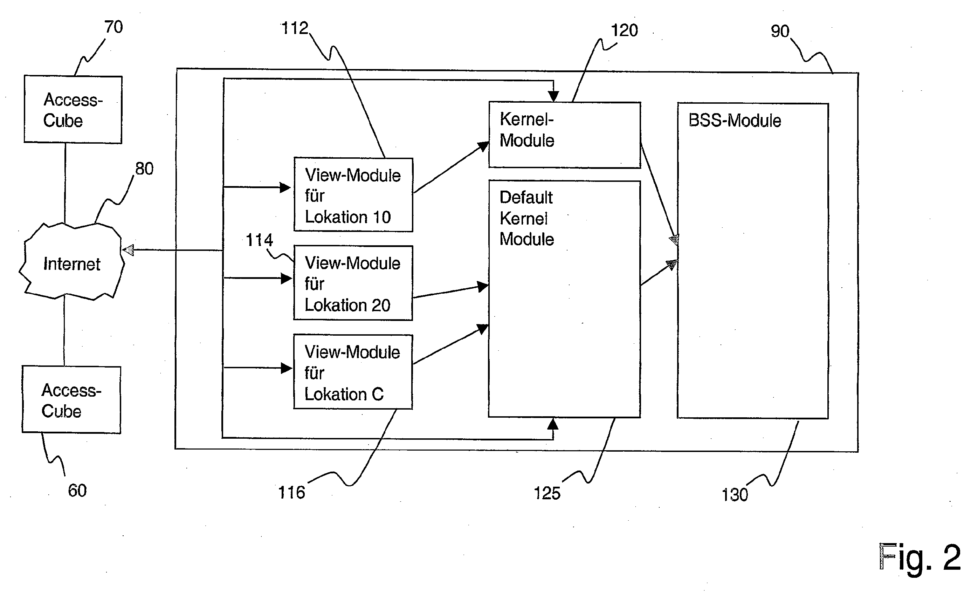

Die Nomads Plattform 90 ist schematisch in Fig. 2 dargestellt und setzt sich aus drei Schichten zusammen, die als View Module 112, 114, 116, Kernel Modul 120, Default Kernel Modul 125 und Business Support Services Modul 130 bezeichnet werden. Die drei Schichten können beliebig viele Module enthalten und somit ein strukturiertes Netzwerk bilden.

In den View Modulen 112, 114, 116 werden alle Anforderungen bezüglich einer Oberflächer (Informationen zum System, Verweis auf lokalen Content, Eingabemöglichkeiten von Informationen durch den Endnutzer oder Operator) implementiert. Daneben kann in jedem View Modul eine Anmelde-Funktionalität implementiert sein, die einem WLAN-Teilnehmer zur Anmeldung an einem Access Cube und/oder der Plattform 90 zur Verfügung gestellt werden kann. Ferner können in jedem View Modul alle verfügbaren Provider (zum Beispiel vWISP, WISP, GSM-Provider u.s.w.) gespeichert sein. Auch eine Vouchergenerierung hinsichtlich eines Dienste-anfordernden WLAN-Teilnehmers ist in einem View Modul möglich.

Vorzugsweise kann für jede Lokation, das sind im vorliegenden Fall die Lokationen oder Hotspots 10 und 20 und die in Fig. 1 nicht dargestellte Lokation C, ein eigenes Look&Feel in Form einer Homepage in dem View Modul 112, dem View Modul 114 bzw. dem View Modul 116 abgelegt werden. An dieser Stelle sei erwähnt, dass für jede Lokation ein eigenes View Modul, welche in Fig. 2 mit 112, 114 und 116 bezeichnet sind, eingerichtet werden kann. Alternativ können alle Lokationen 10, 20 und C in einem einzigen View Modul angelegt werden. In den View Modulen können die Lokationskennung, die Adresse des dazugehörenden Access Cubes, die MAC- und/oder IP-Adresse des WLAN Teilnehmers, der an dem jeweiligen Access Cube angemeldet ist und Oberflächenelemente zur Erzeugung einer individuellen, Lokations-bezogenen Webseite abgelegt werden. Es ist auch denkbar, eine Lokation, beispielsweise die Lokation 10 in Unterlokationen (z. B. Zimmer eines Hotels) zu unterteilen, wobei die Adresse jeder Unterlokation ebenfalls in dem entsprechenden View Modul abgelegt werden kann.

Im Kernel Modul 120 laufen im Wesentlichen die Abrechnungsdaten zusammen, die durch Metering oder Accounting gewonnen werden können. Diese Daten werden soweit wie möglich verdichtet und dem oder den nachfolgenden Business Support Services (BSS) Modul 130 zur Verfügung gestellt. Die gesammelten Daten, ob diese nun als einzelne Daten oder als aggregierte Daten vorliegen, sei hier ohne Belang, werden in Dateien gesammelt und über Filetransfer-Funktionalitäten des SOAP-Protokolls dem entsprechenden BSS-Modul 130 zur Verfügung gestellt.

Im BSS Modul 130 werden alle Anforderungen an die Plattform 90 implementiert, die sich sowohl aus der Umsetzung der Wertschöpfungskette als auch aus der Datensammlung in den dezentralen Access-Cubes 60 und 70 ergeben.

Das Schichtenmodell ermöglicht dabei die spezifische Anpassung der Plattform 90 an die Bedürfnisse der Lokationen oder die Unterstützung der dort vorgegebenen Rahmenbedingungen. Wie Fig. 2 andeutet, wird diese Flexibilität durch das Baukastensystem Nomads unterstützt. Die verschiedenen Lokationen 10, 20 und C, welche in Fig. 1 nicht dargestellt ist, werden jeweils auf ein individuelles View Modul 112, 114 bzw. 116 geleitet, wo das "persönliche" Look&Feel wiedergegeben werden kann. View Module, die hoch verfügbaren Lokationen oder Lokationen mit hoher WLAN-Last, wie zum Beispiel der Lokation 10, zugeordnet sind, werden jeweils an ein eigenes Kernel Modul angeschlossen. Im vorliegenden Beispiel ist das View Modul 112 mit dem Kernel Modul 120 verbunden. Andere View Module, in denen Lokationen mit mittlerer oder niedriger Last angelegt sind, werden an ein Standard- oder Default-Kernel-Modul angeschlossen. Im vorliegenden Beispiel sind die View Module 114 und 116 mit dem Default-Kernel-Modul 125 verbunden. Das Kernel Modul 120 und das Default-Kernel-Modul 125 erkennen die jeweiligen Lokationen und geben die dazugehörenden Information an das BSS Modul 130 weiter.

Die Nomads Plattform 90 ermöglicht es ferner, dass Funktionalitäten auf mehrere, örtlich getrennt angeordnete Module oder Rechner verteilt werden können, wie dies in Fig. 5 angedeutet ist. Für die technische Umsetzung der Verteilung wird eine sogenannte Nomads Verteilungs-Funktionalität 140 (Nomads Distribution Functionality, NDF) eingesetzt, die die folgenden Funktionen bereitstellen kann:
- Flexible Verteilung der Komponeneten auf verschiedene Rechner über Cluster- und Netzwerkgrenzen hinweg. Die Komponenten können Hardware oder Softwarekomponenten enthalten.
- Mögliche Rückfallszenarien für den Ausfall von zentralen Komponenten wie z.B. Kernel Module oder BSS Module. In Fig. 5 sind beispielsweise zwei Module 150 und 160 dargestellt, in denen gleiche oder verschiedene Funktionalitäten implementiert sein können.

Die Netzwerkdienste der NDF bieten im Kern eine Art fachlichen Verzeichnisdienst, der die Zuordnung zwischen den Modulen herstellt, mögliche fachliche Ausweichmodule definiert und auch das Routing übernehmen soll. Für den letzen Fall soll vor allem das Web Service Routing eingesetzt werden.

Angenommen sei , dass das Modul 160 eine bestimmte Dienstleistung anbiete. Dieser Service wird im NDF 140 eingetragen. Wenn das Modul 150 diesen Dienst benötigt, fordert es diesen Dienst an (Resolve) und bindet sich bei Erhalt der Referenz an den Dienst (Bind). Dieser Zyklus wird auch in anderen Framework so angeboten (JINI), wird dort aber z.T. anders bezeichnet.

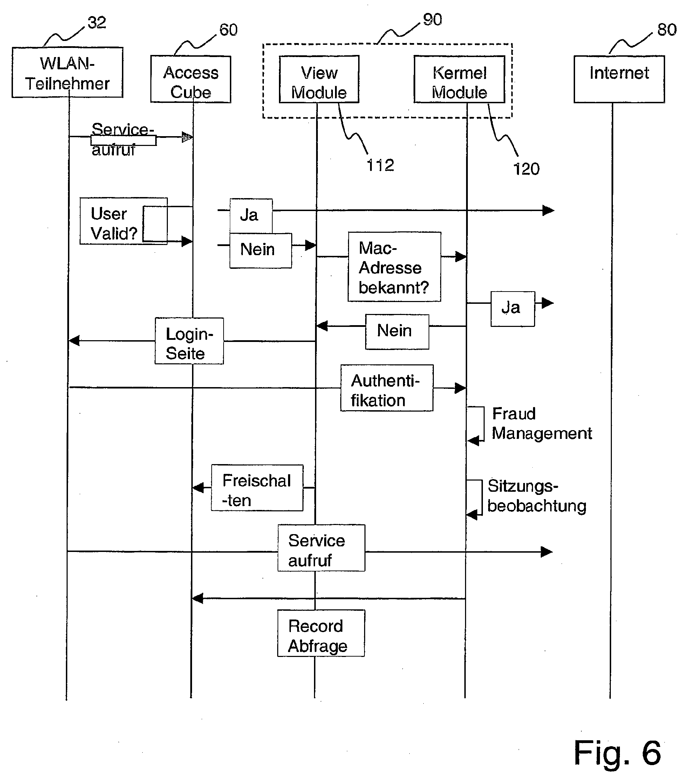

Nachfolgend werden beispielhaft die Kommunikationsbeziehungen zwischen dem Access-Cube 60 und der Plattform 90 in Verbindung mit Fig. 6 erläutert.

Im Prinzip sind zwischen einem Access-Cube, zum Beispiel dem Access Cube 60, und der Nomads Plattform 90 folgende Signalisierungs- und Informationsdaten auszutauschen oder folgende Mechanismen zu implementieren:
- Bei einem initialen Zugriff des WLAN-Teilnehmers 32 über den Access Cube 60 auf das Internet 80 muss ein Anfrage (Request) auf die Plattform 90 geleitet werden, damit die folgenden Dienste realisiert werden können:
   o Authentifizierung insbesondere zur Bildung eines WLAN-Teilnehmers in der Plattform 90. Es wird festgelegt, welche personalisierten Daten und nicht personalisierten Daten (Voucher) für eine kostenpflichtige Verbindung zur Abrechnung herangezogen werden können.
   ∘ Autorisierung. Das heißt, es wird die Akzeptanz bzgl. der WLAN-Nutzung geprüft. Ferner wird geprüft, ob der Dienste-anfordernde WLAN-Teilnehmer für den angeforderten Dienst freigeschaltet werden kann.
- Nach der Freischaltung des WLAN-Teilnehmers wird in der Plattform 90 eine "Beobachtungseinheit" aktiviert, um Abrechnungsdaten von dem Access Cube zu sammeln, an dem sich der WLAN-Teilnehmer angemeldet hat.
- Sperrung von spezifischen WLAN-Teilnehmern oder Endgeräten nach Vorgaben von Betreibern oder anderen Institutionen durch die Plattform 90.

Fig. 6 zeigt den WLAN-Teilnehmer 32, den Access Cube 60 des Hotspots 10, den View Modul 112 und den Kernel Modul 10 der Plattform 90. Der Block "Internet-Zugriff" soll den Zugriff auf das Internet 80 symbolisieren. Nachfolgend werden die Module aufgelistet.

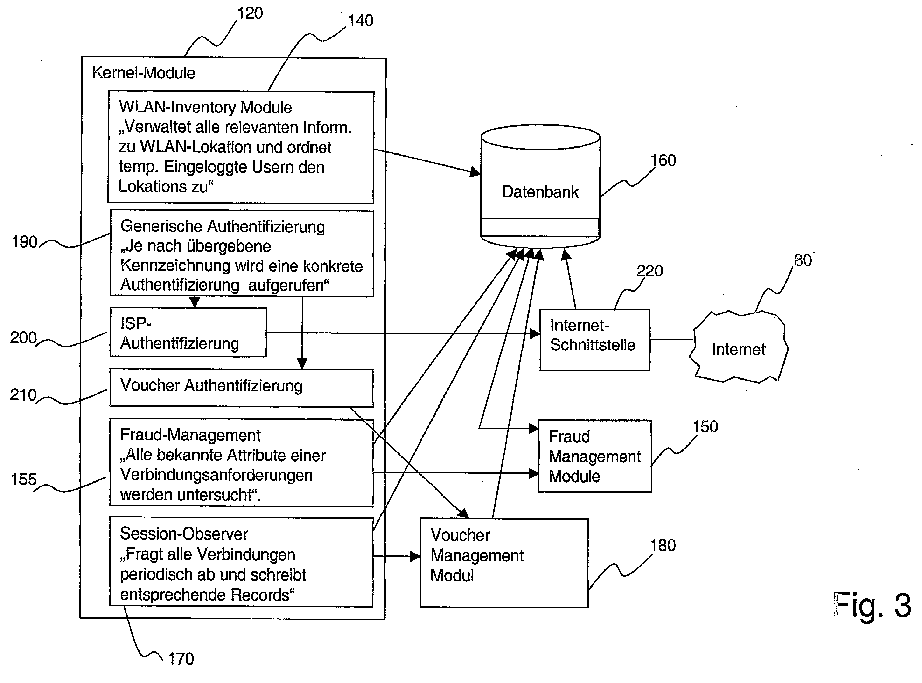

Bei jedem Zugriff des WLAN-Teilnehmers 32 auf das öffentliche TCP/IP Netz 80, hier das Internet, wird im Access-Cube 60 überprüft (User Valid?), ob der WLAN-Teilnehmer 32 zum Internet 80 durchgeschaltet werden kann. Fordert der Nutzer des WLAN-Teilnehmers 32 erstmals einen Zugriff auf das Internet 80 über den Access Cube 60 an, ist der WLAN-Teilnehmer 32 dort unbekannt, so dass der Zugriff am Access Cube 60 verweigert wird. Gemäß einem Standardverhalten wird der WLAN-Teilnehmer 32 über das Internet 80 beispielsweise mit dem View-Modul 112 verbunden und ein Anforderungssignal (Request), welches die MAC-Adresse und/oder IP-Adresse des Nutzers 32 enthalten kann, wird zum View Modul 112 übertragen. Das View-Modul 112 leitet die im Request enthaltene MAC-Adresse des WLAN-Teilnehmers 32 an das Kernel Modul 120, insbesondere an ein WLAN-Inventory-Modul 140, wie es in Fig. 3 dargestellt ist, weiter. Stellt das WLAN-Inventory-Modul 140 fest, dass der WLAN-Teilnehmer 32 oder dessen MAC-Adresse nicht bekannt ist, weist es das View Modul 112 an, eine für die Lokation 10 hinterlegte Login-Seite zum WLAN-Teilnehmer 32 zu übertragen. Diese Seite gibt dem WLAN-Teilnehmers 32 die Möglichkeit, sich über verschiedene Arten an dem Access Cube 60 und der Plattform 90 authentifizieren zu können. Zur Authentifizierung des WLAN-Teilnehmers 32 können im Prinzip folgende Authentifizierungsdaten verwendet werden:
∘ WISP-Account
∘ VWISP-Account
∘ ISP-Account
∘ Kreditkarte
∘ Telefon-Nr.
∘ MAC-Adresse des WLAN-Teilnehmers
∘ IP-Adresse des WLAN-Teilenehmers

Die Authentifizierungsdaten werden dann über den Access Cube 60, das Internet 80, das View Modul 112 zum WLAN-Inventory-Modul 140 des Kernel Moduls 120 übertragen.

Das WLAN-Inventory-Modul 140 bildet unter anderem die Grundlage für das Roaming eines WLAN-Teilnehmers zwischen verschiedenen Access-Cube Bereichen, die z.B. durch die Hotspots 10 und 20 gebildet werden. Zum Beispiel könnte aufgrund der Information, dass der WLAN-teilnehmer 32 mit der MAC-Adresse m in dem Access Cube 70 der Lokation 20 eingetragen ist und sich nunmehr am Access Cube 60 der Lokation 10 anmelden möchte, die Grundlage für das Roaming sein. Denn sobald der WLAN-Teilnehmer 32 einmal an einem Access Cube angemeldet ist, werden die entsprechenden Authentifizierungsdaten sowohl im Kernel Modul 120, vorzugsweise in dem WLAN-Inventory 140, als auch in dem jeweiligen Access Cube registriert. Da im obigen Fall die Authentifizierungsdaten des WLAN-Teilnehmers 32 im Kernel Modul 120 registriert sind, braucht keine erneute Anmeldung oder Authentifizieung am Access Cube 60 durchgeführt werden. In Abhängigkeit vom Aufbau der Infrastruktur kann die positive Identifikation des WLAN-Teilnehmers 32 dazu führen, dass er für die Internetnutzung freigeschaltet wird. Mit anderen Worten ermöglicht die Nomads Plattform 90, dass der WLAN-Teilnehmer 32 von einem Hotspot in einen anderen Hotspot wandern kann, ohne dass er sich jedesmal bei Eintritt in einen neuen Hotspot an der Plattform 90 oder einem Access Cube anmelden muss.

Mit Hilfe des WLAN-Inventory 140 kann ein Roaming über mehrere Access-Cube Bereiche auch dann unterstützt werden, wenn ein Hotspot durch den Aufbau von mehreren Access-Cubes realisiert wird, oder mehrere Hotspots sich in ihrer geographischen Ausbreitung überlappen. Auch in diesen Fällen braucht ein WLAN-Teilnehmer sich nicht erneut zu authentifizieren. Denn nach seiner ersten erfolgreichen Anmeldung ister in der Plattform 90 als berechtigter WLAN-Teilnehmer registriert.

Das WLAN-Inventory Modul 140 ist, wie Fig. 3 zeigt, mit dem Speicher 160, der Lokationsinformationen oder Informationen über die Lokationinhaber speichern kann, verbunden. In dem Speicher 160 gibt es somit Informationen darüber, welchem Lokationinhaber welche Lokation gehört. Über einen Eingangsport werden die Lokationsinformationen dem WLAN-Inventory-Modul 140 geliefert, so dass diese Informationen ebenfalls beim Aufruf des WLAN-Inventory-Moduls 140 zur Verfügung stehen. Es sei angemerkt, dass das WLAN-Inventory-Modul 140, wie in Fig. 3 gezeigt Teil des Kernel Moduls 120 ist. Es kann aber auch separat dazu implementiert werden.

Wurde die Authentifizierung des WLAN-Teilnehmers 32 erfolgreich durchgeführt, wird nachfolgend noch ein Betrugs- oder Fraud-Management 155 in einem Fraud-Management Modul 150 aufgerufen, wie dies in den Fig. 3 und 6 dargestellt ist. Das Betrugsmanagement stellt durch entsprechende Merkmals-Listen fest, ob bestimmte User oder WLAN-Teilnehmer, im vorliegenden Fall der WLAN-Teilnmehmer 32 gesperrt werden sollen. Beim Auffinden eines kritischen Merkmals eines gerade eingeloggten Users, wird der Internetzugang des WLAN-Teilnehmers gesperrt. Werden keine verdächtigen Merkmale festgestellt, wird der Nutzer freigeschaltet und kann nunmehr über das Internet 80 auf Dienste zum Beispiel des Service Providers 100 zugreifen. Bei den Merkmalen kann es sich um Einträge von Service Providern handeln, aus denen sich ergibt, dass bestimmte Nutzer noch offene Rechnungen haben. Das Fraudmanagement Modul sollte demzufolge zumindets die beiden folgenden Aufgaben erfüllen:
- Setzen von Attributen oder Attribute-Mengen (Filter), die während einer Verbindungsaufnahme nach Black-Listen überprüft werden sollen.
- Überprüfung der angemeldeten WLAN-Teilnehmer, indem vorhandene Informationen über die WLAN-Teilnehmer aus dem WLAN-Inventory Modul 140 ausgelesen und mit den gesetzten Attributen verglichen werden.

Während der Zeitdauer der Dienstnutzung wird der WLAN-Teilnehmer 32 durch geeignete Mechanismen überwacht und Verbindungs-bezogene und/oder WLAN-Teilnehmer-bezogene Daten werden als Datei in einen Speicher 160, wie zum Beispiel in Fig. 3 gezeigt, geschrieben.

Hierzu kann eine in Fig. 3 gezeigte Sitzungs-Beobachtungseinrichtung 170, auch Session Observer genannt, verwendet werden. Die Sitzungs-Beobachtungseinrichtung 170 überwacht die vom WLAN-Teilnehmer 32 über das Internet 80 zu einem Service Provider, beispielsweise dem Service Provider 100, hergestellte Verbindung. Die Sitzungs-Beobachtungseinrichtung 170 muss aus den empfangenen Daten erkennen, ob der WLAN-Teilnehmer 32 zum Beispiel ein Voucher ist, bei dem die anfallenden Kosten durch Prepaidkarten abgegolten werden. Hierzu ist die Sitzungs-Beobachtungseinrichtung 170 mit einem Voucher-Management-Modul 180 verbunden, der wiederum mit dem Speicher 160 verbunden sein kann, wie in Fig. 3 gezeigt. Handelt es sich beim WLAN-Teilnehmer 32 um einen Voucher, bewirken Abrechnungs-bezogene Signalisierungsdaten, die vom Access-Cube 60, an dem der WLAN-Teilnehmer 32 augenblicklich angemeldet ist, erzeugt werden, dass im Kernel Modul 120 entsprechende Abrechnungdatensätze, auch CDR (CALL Detail Record) gespeichert und als Dateien auch zum Voucher Management Modul 180 übertragen werden.

Das Voucher Management Modul 180 wird durch View-Module, in denen augenblicklich angemeldete WLAN-Teilnehmer registriert sind, dazu veranlasst, eine einzelne Vouchergenerierung oder eine Massen-Generierung von Vouchern anzustoßen. Die Vouchers werden dabei mit den beispielhaften Attributen:
- VoucherID
- VoucherPasswort
- VoucherWert
- VoucherZeit
gespeichert. Ob die Voucher dabei durch administratives Personal erzeugt und durch Marketing/Sales Kapazitäten vor Ort verkauft werden, oder ein Voucher personalisiert erzeugt wird, spielt dabei keine Rolle. Bei beiden Ansätzen wird der Authentifizierungvorgang eines WLAN-Teilnehmers durch die Voucherwerte VoucherID und VoucherPW angestoßen, wobei das Kernel Modul 120 dann die Presales-Eigenschaft der für den WLAN-Teilnehmer hergestellten Verbindung registriert. Damit kann nun das Kernel Modul 120 nicht nur die CDR-Datensätze der Verbindung generieren, sondern er nimmt auch Verbindung zum Voucher Management Modul 180 auf und minimiert das vorhandene Zeitkontigent des jeweiligen WLAN-Teilnehmers. Sobald das Guthaben eines WLAN-Teilnehmers aufgebraucht ist, wird das Kernel Modul 120 mit Hilfe des Fraud Management Moduls 150 die Verbindung über das Internet 80 trennen.

Bei einem personalisierten Vorgang werden die Voucher einer bestimmten Person zugeordnet, d.h. das Guthaben eines Vouchers wird einer Person gutgeschrieben. Dieser Vorgang führt dazu, dass das Guthaben eines Voucher sofort auf Null gesetzt wird und der Nutzer mit diesem Guthaben "aufgefüllt" wird.

Zur Durchführung der Authentifizierung können im WLAN-Inventory 140 sowohl die MAC-Adresse als auch die IP-Adresse des WLAn-Teilnehmers 32 eingetragen werden. Die Verfügbarkeit dieser Informationen hängt von der eingesetzten Access-Cube Technologie ab. Wie Fig. 3 zeigt, verwaltet das WLAN-Inventory 140 alle relevanten Informationen über Lokationen, wie die Lokationen 10 und 20, und ordnet temporär angemeldeten WLAN-Teilnehmers den entsprechendenLokationen zu. Ist der WLAN-Teilnehmer 32 augenblicklich am Access Cube 60 angemeldet, wird er im WLAN-Inventory der Lokation 10 zugeordnet. All diese Informationen werden in dem Speicher 160 abgelegt.

Wie in Fig. 3 dargestellt, umfasst die im Kernel Modul 120 durchgeführte Authentifizierung eine sogenannte generische Authentifizierung in Block 190, bei der die erhaltenen Daten daraufhin geprüft werden, ob die Daten zu einem Voucher-Teilnehmer oder einem Service Provider gehören. In Abhängigkeit der Prüfung wird dann entweder eine ISP (Internet Service Provider)-Authentifizierung in Block 200 oder eine Voucher-Authentifizierung in Block 210 durchgeführt. Block 200 ist über ein Internet-Schnittstellen-Einrichtung 220 mit dem Internet 80 verbunden. Block 210 ist mit dem Voucher Management Modul 180 verbunden.

Wie Fig. 3 zeigt, sind die Funktionsblöcke 155, 170 190, 200, 210 und das WLAN-Inventory-Modul in dem Kernel Moduls 120 implementiert. Der Speicher 160, die Internet-Schnittstelle 220, das Fraud Management Modul 150 und das Voucher Management Modul 180 sind außerhalb des Kernel Moduls 120 dargestellt. Es versteht sich, dass die dargestellte Anordnung der Komponenten lediglich ein Beispiel widerspiegelt. Selbstverständlich können Komponenten des Kernel Moduls 120 extern angeordnet und die beschriebenen Komponenten 150, 160, 180 oder 220 innerhalbdes Kernel Moduls 120 implementiert werden.

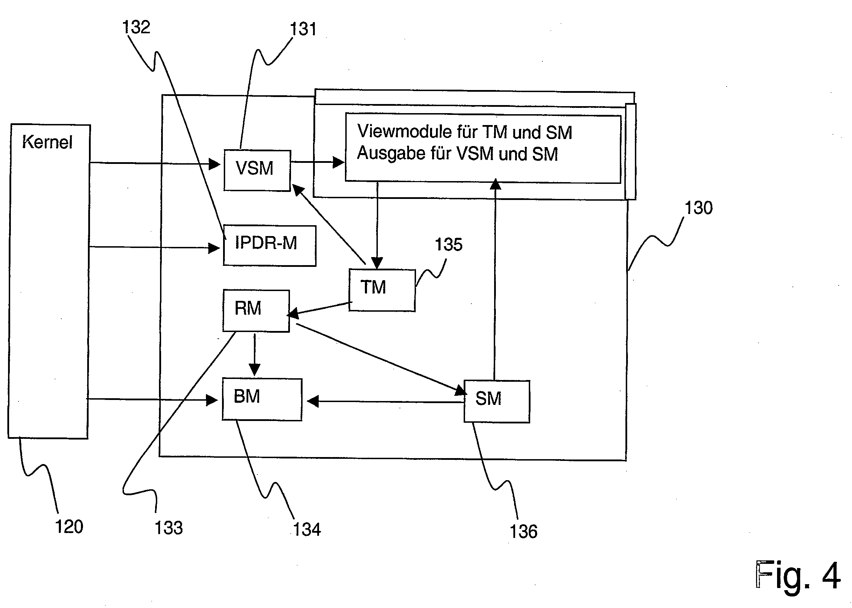

Das BSS-Modul 130 ist in Fig. 4 detaillierter dargestellt. Folgende Eigenschaften kennzeichnen vorzugsweise das BSS-Modul 130aus:
- Das BSS-Modul setzen auf Datenstrukturen auf, die vom Kernel Modul 120 und/oder 125 geliefert werden.
- Das BSS-Modul besitzt keine direkte Verbindung zum Kernel Modul 120 und/oder 125; es existiert lediglich eine lose Kopplung auf der Ebene von CDR-Dateien.

Das BSS-Modul 130 umfasst neben einem Voucher Settlement Modul (VSM) 131, einen IPDR Mediator (IPDR-M) 132, ein Tarifmodul TM) 135, ein Ratingmodul (RM) 133, ein Billing Modul (BM 134 und ein Settlement Modul (SM) 136.

Das Kernel Modul 120 erzeugt zum Beispiel Guthaben-Abrechnungsdatensätze, auch Voucher CDR's genannt, mit folgenden Parametern:
- Access Cube ID
- Voucherkennung (dieser CDR gehört zu einer Prepaid-Ausprägung)
- Zeitstempel (Beginn und Ende)
- Tarifinformationen (Preis pro Zeiteinheit)
- Mengeninformation

Aufgrund dieser Informationen kann das Voucher Settlement Modul 131 zum Beispiel unter Zugriff auf die Datenbank 160 der Plattform 90 folgende Verarbeitungsschritte vornehmen:
- Zuordnung der Access Cube ID auf eine Lokation
- Zuordnung von Lokation auf Revenue-Share Beteiligte oder Revenue-Share

In einem ersten Verarbeitungsschritt werden aus den einzelnen CDR's die Summe der Verbindungen pro Lokation oder Hotspot berechnet. Diese Summe oder der Umsatz ergibt sich aus dem Zeitraum multipliziert mit der Tarifinformation. Über die Information der Revenue-Share Anteile der Beteiligten können die einzelnen Revenue-Anteile errechnet werden und diese Datensätze als Revenue-Share Records (RSR) gespeichert werden.

Der IPDR Mediator 132 erzeugt aus den CDR's die nicht die Kennung Voucher besitzen IPDR-Datensätze nach dem Standard NDM-U der non-Profil Organisation IPDR.Org.

In dem Tarif Modul 135 sind alle Informationen enthalten, die sich aus den unterschiedlichen Tarifierungen der entsprechenden Lokationen ergeben. Es sind ebenfalls die unterschiedlichen Kundengruppierungen zu beachten. Die Details ergeben sich aus der jeweiligen Projektanforderungen. Es ist im Kern ein generischen Modell implementiert, dass die meisten Anforderungen abdecken kann.

Das Ratingmodul 133 ist ebenfalls generisch implementiert, so dass die entsprechenden Anforderungen von den Beteiligten implementiert werden können. Das Rating Modul 133 erzeugt aus den CDRs gewichtete, sogenannte R-CDRs.

Das Billing- oder Abrechnungs-Modul 134 bedient sich zum Beispiel der Abrechnungsfunktionalität der T-COM. Alle vom Rating Modul 133 erzeugten R-CDR's werden über eine File-Schnittstelle zum Beispiel an das Abrechnungssystem der T-COM geleitet. Hier werden folgende Business-Schritte umgesetzt:
- Erzeugung der Rechnung (invoice)
- Druck der Rechnung nach vorgegebenen Format (Look&Feel des z.B. vWISP)
- Übergabe der Bezahlungskontrolle an das FIBU
- Mahnwesen

Parallel zum Billing Modul 134 werden die vom Rating-Modul 133 erzeugten R-CDR's an das Settlement Modul 136 geleitet, welches folgende Informationen besitzt:
- Kenntnis über die Beteiligten in einer definierten Wertschöpfungskette oder Kenntnis über die prozentuale Aufteilung des Umsatzes
- Abbildungsinformationen von Lokationen auf die möglichen RevenueShare Modelle.

Mit diesem Wissen können die R-CDR's pro Lokation berechnet und den Beteiligten zugeordnet werden.

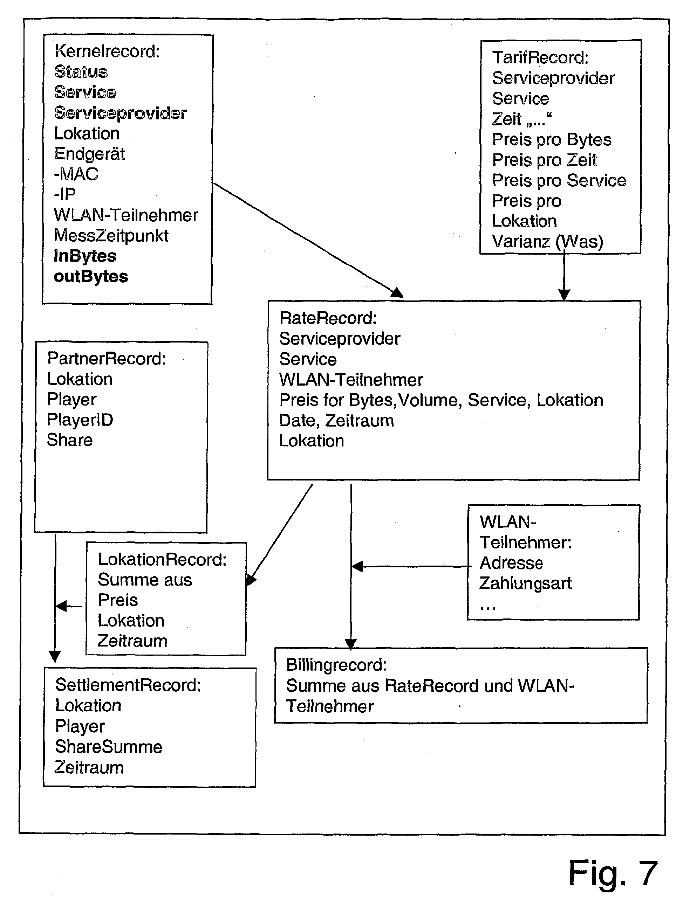

In Fig. 7 ist dargestellt, welche Daten in welchen Modulen verwaltet werden und welche Daten zwischen welchen Modulen ausgetauscht werden.

## Patentansprüche

1. Verfahren zum externen Steuern und Verwalten wenigstens eines, wenigstens einem lokalen Funknetz (WLAN:Wireless Local Area Network, 12, 52) zugeordneten WLAN-Teilnehmers (32), der über ein öffentliches TCP/IP-Netz (80) Dienste anfordern kann, wobei wenigstens ein lokales Funknetz (12; 52) über wenigstens eine Schnittstellen-Einrichtung (60; 70) und eine externe Steuer- und Verwaltungseinrichtung (90) mit dem öffentlichen TCP/IP- Netz (80) verbunden ist, mit folgenden Schritten: ein WLAN-Teilnehmer (32) fordert einen Dienst an; die Berechtigung des Zugangs des Diensteanfordernden WLAN-Teilnehmers (32) zum TCP/IP-Netz (80) wird geprüft; eine Verbindung wird über das TCP/IP-Netz (80) zum WLAN- Teilnehmer (32) hergestellt, wenn der WLAN-Teilnehmer eine Zugangsberechtigung zum TCP/IP-Netz besitzt; und Signalisierungs- und/oder Informationsdaten werden über das TCP/IP-Netz (80) zur externen Steuer- und Verwaltungseinrichtung (90) übertragen und dort verwaltet, **dadurch gekennzeichnet, dass**
der Auslastungsgrad des wenigstens einen lokalen Funknetzes in der externen Steuer- und Verwaltungseinrichtung (90) erfasst und protokolliert wird, so dass in Abhängigkeit des Auslastungsgrades einem Dienste-anfordernden WLAN-Teilnehmer die Zugangsberechtigung zum TCP/IP-Netz zumindest vorübergehend verweigert werden kann.

2. Verfahren nach Anspruch 1, **dadurch gekennzeichnet, dass** die Signalisierungsdaten Abrechnungsdaten enthalten, aus denen Abrechnungsdatensätze erzeugt und an eine Abrechnungseinheit (130) weitergeleitet werden.

3. Verfahren nach Anspruch 1 oder 2, **dadurch gekennzeichnet, dass** die Zugangsberechtigung in einer dem lokalen Funknetz (12) zugeordneten Schnittstellen-Einrichtung (60) geprüft wird.

4. Verfahren nach Anspruch 3, **dadurch gekennzeichnet, dass** wenigstens eine individuelle Kennung, insbesondere die MAC-Adresse und/oder die IP-Adresse, des Dienste- anfordernden WLAN-Teilnehmers (32) zur externen Steuer- und Verwaltungseinrichtung (90) übertragen wird, wenn festgestellt wird, dass der Dienste-anfordernde WLAN-Teilnehmer (32) bezüglich der Schnittstellen-Einrichtung (60) nicht freigeschaltet worden ist, dass unter Ansprechen auf die individuelle Kennung in der externen Steuer- und Verwaltungseinrichtung (90) geprüft wird, ob dem Diensteanfordernden WLAN-Teilnehmer bereits eine Zugangsberechtigung erteilt worden ist, und dass eine Verbindung über das TCP/IP-Netz (80) hergestellt wird, wenn der WLAN-Teilnehmer eine Zugangsberechtigung zum TCP/IP-Netz besitzt.

5. Verfahren nach Anspruch 4, **dadurch gekennzeichnet, dass** der WLAN-Teilnehmer (32) aufgefordert wird, seine Authentifizierungsdaten einzugeben, wenn diesem noch keine Zugangsberechtigung erteilt worden ist, und dass der WLAN-Teilnehmer (32) nach Eingabe der Authentifizierungsdaten eine Zugangsberechtigung zum TCP/IP-Netz (80) erhält.

6. Verfahren nach Anspruch 3 oder 5, **dadurch gekennzeichnet, dass** in der externen Steuer- und Verwaltungseinrichtung (90) geprüft wird, ob der Dienste-anfordernde WLAN-Teilnehmer zur Nutzung des TCP/IP-Netzes und/oder des angeforderten Dienstes berechtigt ist.

7. Verfahren nach einem der Ansprüche 1 bis 6, **dadurch gekennzeichnet, dass** in der externen Steuer- und Verwaltungseinrichtung (90) die Kennung und/oder der Inhaber jedes lokalen Funknetzes und/oder die Adresse der jedem lokalen Funknetz (12; 52) zugeordneten Schnittstellen-Einrichtungen (60; 70) gespeichert werden.

8. Verfahren nach Anspruch 7, **dadurch gekennzeichnet, dass** für wenigstens ein lokales Funknetz und/oder wenigstens einen WLAN-Teilnehmer in der externen Steuer- und Verwaltungseinrichtung eine individuelle Webseite abgelegt wird, die einem Dienste-anfordernden WLAN-Teilnehmer übermittelt werden kann.

9. Verfahren nach Anspruch 8, **dadurch gekennzeichnet, dass** sich ein Dienste-anfordernder WLAN-Teilnehmer (32) mittels einer übermittelten Webseite an der Schnittstellen-Einrichtung (60) eines lokalen Funknetzes (12), in dessen Versorgungsbereich er sich befindet, anmelden kann, um eine Zugangsberechtigung zum öffentlichen TCP/IP-Netz zu erhalten.

10. Verfahren nach einem der Ansprüche 7 bis 9, **dadurch gekennzeichnet, dass** in der externen Steuer- und Verwaltungseinrichtung (90) eine Tabelle verwaltet wird, in der jedem Dienste- anfordernden WLAN-Teilnehmer (32), dem eine Zugangsberechtigung erteilt worden ist, die Kennung und/oder der Inhaber des lokalen Funknetzes (12) und/oder die Adresse der dem lokalen Funknetz zugeordneten Schnittstellen-Einrichtung (60) zugewiesen wird, an der der WLAN-Teilnehmer (32) augenblicklich angemeldet ist.

11. Verfahren nach einem der Ansprüche 2 bis 10, **dadurch gekennzeichnet, dass** festgestellt wird, ob der Dienste-anfordernde WLAN- Teilnehmer über ein Guthaben verfügt, und dass, wenn ja, eine hergestellte Verbindung getrennt oder keine Verbindung hergestellt wird, wenn das Guthaben aufgebraucht worden ist.

12. Anordnung aus mehreren Kommunikationsnetzen, insbesondere zur Durchführung des Verfahrens nach einem der Ansprüche 1 bis 10, mit wenigstens einem lokalen Funknetz (12; 52), welches über wenigstens eine Schnittstellen-Einrichtung (60; 70) mit einem öffentlichen TCP/IP-Netz (80) verbunden ist, wenigstens einem WLAN-Teilnehmer (32) und einer dem öffentlichen TCP/IP-Netz (80) zugeordneten Steuer- und Verwaltungseinrichtung (90), wobei die Schnittstelleneinrichtungen (60, 70) und die Steuer- und Verwaltungseinrichtung (90) Einrichtungen zum Austauschen von Signalisierungs- und/oder Informationsdaten über das öffentliche TCP/IP-Netz aufweisen, wobei die Schnittstelleneinrichtung (60, 70) und/oder die Steuer- und Verwaltungseinrichtung (90) jeweils eine Prüfeinrichtung (120) zum Prüfen der Zugangsberechtigung eines Diensteanfordernden WLAN-Teilnehmers (32) zum öffentlichen TCP/IP-Netz aufweisen, und wobei die Steuer- und Verwaltungseinrichtung (90) eine Einrichtung zum Steuern der Herstellung einer Verbindung über das öffentliche TCP/IP-Netz zum Dienste-anfordernden WLAN-Teilnehmer aufweist, und zwar in Abhängigkeit davon, dass der WLAN-Teilnehmer eine Zugangsberechtigung zum TCP/IP-Netz besitzt, **dadurch gekennzeichnet, dass**
die Steuer- und Verwaltungseinrichtung (90) eine Einrichtung (140) zum Erfassen des Auslastungsgrades wenigstens eines lokalen Funknetzes (12, 52) und eine Sperreinrichtung aufweisen, die in Abhängigkeit des Auslastungsgrades einem Dienste-anfordernden WLAN-Teilnehmer die Zugangsberechtigung zum TCP/IP-Netz zumindest vorübergehend verweigern kann.

13. Anordnung aus mehreren Kommunikationsnetzen nach Anspruch 12, **dadurch gekennzeichnet, dass** die Signalisierungsdaten Abrechnungsdaten enthalten und dass die Steuer- und Verwaltungseinrichtung (90) eine Einrichtung (120) zum Erzeugen von Abrechnungsdatensätzen aus den Abrechnungsdaten und eine Einrichtung zum Weiterleiten der Abrechnungsdatensätze zu einer Abrechnungseinheit (130) aufweist.

14. Anordnung aus mehreren Kommunikationsnetzen nach Anspruch 12, **dadurch gekennzeichnet, dass** die Schnittstellen-Einrichtung (60, 70) eine Einrichtung zum Übertragen wenigstens einer individuellen Kennung, insbesondere der MAC-Adresse und/oder der IP-Adresse, eines Diensteanfordernden WLAN-Teilnehmers zur externen Steuer-und Verwaltungseinrichtung (90) aufweist, wobei die Prüfeinrichtung (120, 140) der Steuer- und Verwaltungseinrichtung (90) unter Ansprechen auf die individuelle Kennung prüfen kann, ob dem Diensteanfordernden WLAN-Teilnehmer bereits eine Zugangsberechtigung erteilt worden ist.

15. Anordnung aus mehreren Kommunikationsnetzen nach einem der Ansprüche 12 bis 14, **dadurch gekennzeichnet, dass** die Steuer- und Verwaltungseinrichtung (90) eine Einrichtung (112, 114, 116) zum Speichern einer individuellen Webseite für wenigstens ein lokales Funknetz (12, 52) und/oder für wenigstens einen WLAN- Teilnehmer (32) sowie eine Einrichtung zum übermitteln einer Webseite zu einem Diensteanfordernden WLAN- Teilnehmer aufweist.

16. Anordnung aus mehreren Kommunikationsnetzen nach einem der Ansprüche 12 bis 15, **dadurch gekennzeichnet, dass** der Prüfeinrichtung (120) der Steuer- und Verwaltungseinrichtung (90) eine Einrichtung (150, 155) zum Prüfen der Autorisierung eines Dienste-anfordernden WLAN-Teilnehmers zugeordnet ist.

17. Anordnung aus mehreren Kommunikationsnetzen nach einem der Ansprüche 12 bis 16, **dadurch gekennzeichnet, dass** die Steuer- und Verwaltungseinrichtung (90) eine Einrichtung zum Speichern der Kennung und/oder des Inhabers eines lokalen Funknetzes und/oder der Adresse der dem lokalen Funknetz zugeordneten Schnittstellen- Einrichtungen sowie eine Einrichtung (140) zum Verwalten einer Tabelle, in der jedem Dienste-anfordernden WLAN-Teilnehmer, dem eine Zugangsberechtigung erteilt worden ist, die Kennung und/oder der Inhaber des lokalen Funknetzes und/oder die Adresse der dem lokalen Funknetz zugeordneten Schnittstellen-Einrichtung (60, 70) zugewiesen ist, an der der WLAN-Teilnehmer (32) augenblicklich angemeldet ist.

18. Anordnung aus mehreren Kommunikationsnetzen nach einem der Ansprüche 12 bis 17, **dadurch gekennzeichnet, dass** die Steuer- und Verwaltungseinrichtung (90) eine Einrichtung (180, 210) zum Ermitteln des Zahlungstyps eines Diensteanfordernden WLAN-Teilnehmers (32) aufweist.

19. Anordnung aus mehreren Kommunikationsnetzen nach einem der Ansprüche 12 bis 18, **dadurch gekennzeichnet, dass** die Schnittstellen-Einrichtung (60, 70) zum Übertragen von Abrechnungsdaten ausgebildet ist.

20. Anordnung aus mehreren Kommunikationsnetzen nach einem der Ansprüche 12 bis 19, **dadurch gekennzeichnet, dass** die Einrichtungen der Steuer- und Verwaltungseinrichtung (90) auf mehrere, ein Rechnernetz bildende Rechner (112, 114, 116, 120, 125, 130) verteilt sind.

21. Anordnung aus mehreren Kommunikationsnetzen nach Anspruch 20, **dadurch gekennzeichnet, dass** die Steuer- und Verwaltungseinrichtung (90) eine Einrichtung zum Überwachen und Verwalten der Rechner und der Verteilung der Einrichtungen der Steuer- und Verwaltungseinrichtung auf den Rechnern aufweist.

22. Anordnung aus mehreren Kommunikationsnetzen nach Anspruch 20 oder 21, **gekennzeichnet durch** wenigstens einen ersten Rechner (120), in dem die Prüfeinrichtung, die Einrichtung zum Erzeugen von Abrechnungsdatensätzen, die Einrichtung zum Erfassen des Auslästungsgrades wenigstens eines lokalen Funknetzes, die Sperreinrichtung und die Einrichtung zum Ermitteln des Zahlungstyps implementiert ist, wenigstens einen zweiten Rechner (112, 114, 116), in dem die Einrichtung zum Speichern individueller Benutzeroberflächen und die Einrichtung zum Übermitteln einer Benutzeroberfläche zu einem Dienste-anfordernden WLAN-Teilnehmer implementiert ist, und wenigstens einen dritten Rechner (130), in dem die Abrechnungseinheit implementiert ist.

23. Steuer- und Verwaltungseinrichtung (90) zum Einsatz in einer Anordnung aus mehreren Kommunikationsnetzen (12, 52, 80) gemäß einem der Ansprüche 12 bis 22, mit Einrichtungen (112, 114, 116,120) zum Austauschen von Signalisierungs- und/oder Informationsdaten mit einer Schnittstellen-Einrichtung (60; 70) eines lokalen Funknetzes (12; 52), die über ein öffentliches TCP/IP- Netz (80) miteinander verbunden sind, einer Prüfeinrichtung (120, 140, 190, 200, 210) zum Prüfen der Zugangsberechtigung eines Dienste-anfordernden WLAN-Teilnehmers (32) zum öffentlichen TCP/IP-Netz (80), und einer Einrichtung zum Steuern der Herstellung einer Verbindung über das öffentliche TCP/IP-Netz zum Diensteanfordernden WLAN-Teilnehmer, und zwar in Abhängigkeit davon, dass der WLAN-Teilnehmer (32) eine Zugangsberechtigung zum TCP/IP-Netz (80) besitzt **dadurch gekennzeichnet, dass**
eine Einrichtung (140) zum Erfassen des Auslastungsgrades wenigstens eines lokalen Funknetzes (12; 52) und eine Sperreinrichtung, die in Abhängigkeit des Auslastungsgrades einem Dienste-anfordernden WLAN-Teilnehmer die Zugangsberechtigung zum TCP/IP-Netz (80) zumindest vorübergehend verweigern kann.

24. Steuer- und Verwaltungseinrichtung nach Anspruch 23, **gekennzeichnet durch** eine Einrichtung (120) zum Erzeugen von Abrechnungsdatensätzen und eine Einrichtung zum Weiterleiten der Abrechnungsdatensätze zu einer Abrechnungseinheit (130).

25. Steuer- und Verwaltungseinrichtung nach Anspruch 23 oder 24, **dadurch gekennzeichnet, dass** die Prüfeinrichtung (120, 140) unter Ansprechen auf eine individuelle Kennung eines Dienste-anfordernden WLAN- Teilnehmers prüfen kann, ob dem Dienste-anfordernden WLAN-Teilnehmer bereits eine Zugangsberechtigung erteilt worden ist.

26. Steuer- und Verwaltungseinrichtung nach einem der Ansprüche 23 bis 25, **dadurch gekennzeichnet, dass** die Prüfeinrichtung als eine Einrichtung (150, 155) zum Prüfen der Autorisierung eines Dienste-anfordernden WLAN-Teilnehmers ausgebildet ist.

27. Steuer- und Verwaltungseinrichtung nach einem der Ansprüche 23 bis 26, **gekennzeichnet durch** eine Einrichtung (160) zum Speichern der Kennung und/oder des Inhabers eines lokalen Funknetzes (12, 52) und/oder der Adresse der dem lokalen Funknetz zugeordneten Schnittstellen-Einrichtungen sowie eine Einrichtung (140) zum Verwalten einer Tabelle, in der jedem Dienste-anfordernden WLAN-Teilnehmer (32), dem eine Zugangsberechtigung erteilt worden ist, die Kennung und/oder der Inhaber des lokalen Funknetzes (12; 52) und/oder die Adresse der dem lokalen Funknetz zugeordneten Schnittstellen-Einrichtung (60; 70) zugewiesen ist, an der der WLAN-Teilnehmer augenblicklich angemeldet ist.

28. Steuer- und Verwaltungseinrichtung nach einem der Ansprüche 23 bis 27, **gekennzeichnet durch** eine Einrichtung (180, 210) zum Ermitteln des Zahlungstyps eines Dienste-anfordernden WLAN-Teilnehmers.

29. Steuer- und Verwaltungseinrichtung nach einem der Ansprüche 23 bis 28, **dadurch gekennzeichnet, dass** die Steuer- und Verwaltungseinrichtung mehrere, ein Rechnernetz bildende Rechner (112, 114, 116, 120, 125, 130) enthält, in denen die einzelnen Einrichtungen in vorbestimmter Weise implementiert sind.

30. Steuer- und Verwaltungseinrichtung nach Anspruch 29, **gekennzeichnet durch** eine Einrichtung zum Überwachen und Verwalten der Rechner und der Zuordnung der Einrichtungen zu den Rechnern.

## Claims

1. A method for externally controlling and managing at least one WLAN subscriber (32) assigned to at least one local wireless network (WLAN: Wireless Local Area Network, 12, 52) capable of requesting services over a public TCP/IP network (80), wherein at least one local wireless network (12; 52) is connected to the public TCP/IP network (80) via at least one interface device (60; 70) and an external control and managing device (90), comprising the following steps: a WLAN subscriber (32) requesting service; the authorization of the WLAN subscriber (32) requesting service to access the TCP/IP network (80) is verified; a connection to the WLAN subscriber (32) over the TCP/IP network (80) is established when the WLAN subscriber has an access authorization to said TCP/IP network; and signaling and/or information data are transmitted over the TCP/IP network (80) to the external control and managing device (90) and are managed there,
**characterized in that**
the utilization rate of the at least one local wireless network is determined and logged in the external control and managing device (90) such that a WLAN subscriber requesting service can be at least temporarily denied access authorization to the TCP/IP network as a function of the utilization rate.

2. The method according to claim 1, **characterized in that** the signaling data contains accounting data from which accounting records can be generated and forwarded to an accounting module (130).

3. The method according to claim 1 or 2, **characterized in that** the access authorization is verified in an interface device (60) assigned to the local wireless network (12).

4. The method according to claim 3, **characterized in that** at least one individual identifier, particularly the MAC address and/or IP address of the WLAN subscriber (32) requesting service, is transmitted to the external control and managing device (90) when it is determined that the service-requesting WLAN subscriber (32) is not activated respective the interface device (60); that whether the service-requesting WLAN subscriber has already been granted access authorization is verified in the external control and managing device (90) in response to the individual identifier; and that a connection is established over the TCP/IP network (80) when the WLAN subscriber already has authorization to access the TCP/IP network.

5. The method according to claim 4, **characterized in that** the WLAN subscriber (32) is prompted to enter his authentication data when he has not yet been granted access authorization and that the WLAN subscriber (32) is given access authorization to the TCP/IP network (80) after entering the authentication data.

6. The method according to claim 3 or 5, **characterized in that** the external control and managing device (90) verifies whether the service-requesting WLAN subscriber is authorized to use the TCP/IP network and/or the requested service.

7. The method according to any one of claims 1 to 6, **characterized in that** the identifier and/or the owner of the respective local wireless network and/or the address of the interface device (60; 70) assigned to the respective local wireless network (12; 52) is/are stored in the external control and managing device (90).

8. The method according to claim 7, **characterized in that** an individual website able to be transmitted to a WLAN subscriber requesting service is stored in the external control and managing device for at least one local wireless network and/or at least one WLAN subscriber.

9. The method according to claim 8, **characterized in that** a service-requesting WLAN subscriber (32) can log onto the interface device (60) of a local wireless network (12) from the service area of same using the transmitted individual website so as to obtain access authorization to the public TCP/IP network.

10. The method according to any one of claims 7 to 9, **characterized in that** a table is managed in the external control and managing device (90) in which the identifier and/or the owner of the local wireless network (12) and/or the address of the local wireless network-associated interface device (60) at which the WLAN subscriber (32) is currently logged in is/are assigned to the respective service-requesting WLAN subscriber (32) if same has been granted access authorization.

11. The method according to any one of claims 2 to 10, **characterized in that** it is determined whether the service-requesting WLAN subscriber has a credit balance and that, if so, an established connection is disconnected or no connection is established once the credit balance has been depleted.

12. A system comprising a plurality of communication networks, particularly for realizing the method according to any one of claims 1 to 10, comprising at least one local wireless network (12; 52) connected to a public TCP/IP network (80) by means of at least one interface device (60; 70); at least one WLAN subscriber (32) and a control and managing device (90) assigned to the public TCP/IP network (80), wherein the interface device (60; 70) and the control and managing device (90) comprise devices for exchanging signaling and/or information data over the public TCP/IP network, wherein the respective interface device (60; 70) and/or the control and managing device (90) comprise(s) a checking device (120) for verifying the authorization of a WLAN subscriber (32) requesting service to access the public TCP/IP network, and wherein the control and managing device (90) comprises a device for controlling the establishing of a connection over the public TCP/IP network to the service-requesting WLAN subscriber and doing so as a function of whether the WLAN subscriber has authorization to access the TCP/IP network,
**characterized in that**
the control and managing device (90) comprises a device (140) for determining the utilization rate of at least one local wireless network (12, 52) and a blocking device capable of at least temporarily denying the service-requesting WLAN subscriber the authorization to access the TCP/IP network as a function of the utilization rate.

13. The system of multiple communication networks according to claim 12, **characterized in that** the signaling data contains accounting data and that the control and managing device (90) comprises a device (120) for generating accounting records from the accounting data and a device for forwarding the accounting records to an accounting module (130).

14. The system of multiple communication networks according to claim 12, **characterized in that** the interface device (60, 70) comprises a device for transmitting at least one individual identifier, particularly the MAC address and/or IP address of the WLAN subscriber (32) requesting service, to the external control and managing device (90), wherein the checking device (120, 140) of the control and managing device (90) can verify based on the response to the individual identifier whether the service-requesting WLAN subscriber has already been granted access authorization.

15. The system of multiple communication networks according to any one of claims 12 to 14, **characterized in that** the control and managing device (90) comprises a device (112, 114, 116) for storing an individual website for at least one local wireless network (12, 52) and/or for at least one WLAN subscriber (32) as well as a device for transmitting a website to a WLAN subscriber requesting service.

16. The system of multiple communication networks according to any one of claims 12 to 15, **characterized in that** the checking device (120) of the control and managing device (90) is allocated a device (150, 155) for verifying the authorization of a service-requesting WLAN subscriber.

17. The system of multiple communication networks according to any one of claims 12 to 16, **characterized in that** the control and managing device (90) comprises a device for storing the identifier and/or the owner of a local wireless network and/or the address of the interface devices assigned to the local wireless network as well as a device (140) for managing a table in which the identifier and/or the owner of the local wireless network and/or the address of the local wireless network-associated interface device (60, 70) at which the WLAN subscriber (32) is currently logged in is/are assigned to the respective service-requesting WLAN subscriber if same has been granted access authorization.

18. The system of multiple communication networks according to any one of claims 12 to 17, **characterized in that** the control and managing device (90) comprises a device (180, 210) for determining the method of payment of a service-requesting WLAN subscriber (32).

19. The system of multiple communication networks according to any one of claims 12 to 18, **characterized in that** the interface device (60, 70) is designed to transmit accounting data.

20. The system of multiple communication networks according to any one of claims 12 to 19, **characterized in that** the devices of the control and managing device (90) are distributed over a plurality of computers (112, 114, 116, 120, 125, 130) forming a computer network.

21. The system of multiple communication networks according to claim 20, **characterized in that** the control and managing device (90) comprises a device for monitoring and managing the computers and the distribution of the devices of the control and managing device among the computers.

22. The system of multiple communication networks according to claim 20 or 21, **characterized by** at least one first computer (120) in which the checking device, the device for generating accounting records, the device for determining the utilization rate of at least one wireless local network, the blocking device and the device for determining the method of payment are implemented, at least one second computer (112, 114, 116) in which the device for storing individual user interfaces and the device for transmitting a user interface to a service-requesting WLAN subscriber is implemented, and at least one third computer (130) in which the accounting module is implemented.

23. A control and managing device (90) for use in a system of multiple communication networks (12, 52, 80) in accordance with any one of claims 12 to 22, comprising devices (112, 114, 116, 120) for exchanging signaling and/or information data with an interface device (60; 70) of a wireless local network (12; 52) connected together by means of a public TCP/IP network (80), a checking device (120, 140, 190, 200, 210) for verifying the access authorization of a service-requesting WLAN subscriber (32) to the public TCP/IP network (80), and a device for controlling the establishing of a connection to the service-requesting WLAN subscriber over the public TCP/IP network and doing so as a function of whether the WLAN subscriber (32) has authorization to access the TCP/IP network (80), **characterized in that**
a device (140) is provided for determining the utilization rate of at least one wireless local network (12; 52) as well as a blocking device able to at least temporarily deny the service-requesting WLAN subscriber authorization to access the TCP/IP network (80) as a function of the utilization rate.

24. The control and managing device according to claim 23, **characterized by** a device (120) for generating accounting records and a device for forwarding the accounting records to an accounting module (130).

25. The control and managing device according to claim 23 or 24, **characterized in that** the checking device (120, 140) is able to verify by the response to an individual identifier of a service-requesting WLAN subscriber whether said service-requesting WLAN subscriber has already been granted access authorization.

26. The control and managing device according to any one of claims 23 to 25, **characterized in that** the checking device is designed as a device (150, 155) for verifying the authorization of a WLAN subscriber requesting service.

27. The control and managing device according to any one of claims 23 to 26, **characterized by** a device (160) for storing the identifier and/or the owner of a wireless local network (12, 52) and/or the address of the interface devices assigned to the wireless local network as well as a device (140) for managing a table in which the identifier and/or the owner of the local wireless network (12; 52) and/or the address of the local wireless network-associated interface device (60; 70) at which the WLAN subscriber (32) is currently logged in is/are assigned to the respective service-requesting WLAN subscriber (32) if same has been granted access authorization.

28. The control and managing device according to any one of claims 23 to 27, **characterized by** a device (180, 210) for transmitting the method of payment of a service-requesting WLAN subscriber.

29. The control and managing device according to any one of claims 23 to 28, **characterized in that** the control and managing device comprises a plurality of computers (112, 114, 116, 120, 125, 130) forming a computer network in which the individual devices are implemented in predetermined manner.

30. The control and managing device according to claim 29, **characterized by** a device for monitoring and managing the computers and the allocation of the devices to the computers.

## Revendications

1. Procédé de commande et de gestion externes d'au moins un abonné WLAN (32) associé à au moins un réseau local (WLAN : Wireless Local Area Network, 12, 52) qui peut demander des services par l'intermédiaire d'un réseau TCP/IP public (80), dans lequel au moins un réseau local (12 ; 52) est connecté par l'intermédiaire d'au moins un dispositif d'interface (60 ; 70) et d'un dispositif de commande et de gestion externe (90) au réseau TCP-IP public (80), comprenant les étapes suivantes : un abonné WLAN (32) demande un service ; le droit d'accès de l'abonné WLAN demandeur de service (32) au réseau TCP-IP (80) est vérifié ; une connexion est établie par l'intermédiaire du réseau TCP-IP (80) à l'abonné WLAN (32) si l'abonné WLAN possède un droit d'accès au réseau TCP-IP ; et des données de signalisation et/ou d'information sont transmises par l'intermédiaire du réseau TCP-IP (80) au dispositif de commande et de gestion externe (90) et sont gérées dans celui-ci, **caractérisé en ce que**
le taux d'utilisation de l'au moins un réseau radio dans le dispositif de commande et de gestion externe (90) est détecté et consigné de manière à ce que le droit d'accès au réseau TCP-IP puisse être au moins temporairement refusé à un abonné WLAN demandeur de service en fonction du taux d'utilisation.

2. Procédé selon la revendication 1, **caractérisé en ce que** les données de signalisation contiennent des données de facturation à partir desquelles des enregistrements de données de facturation sont générés et sont communiqués à une unité de facturation (130).

3. Procédé selon la revendication 1 ou 2, **caractérisé en ce que** le droit d'accès est vérifié dans un dispositif d'interface (60) associé au réseau local (12).

4. Procédé selon la revendication 3, **caractérisé en ce qu'**au moins un identifiant individuel, notamment l'adresse MAC et/ou l'adresse IP, de l'abonné WLAN demandeur de service (32) est transmis au dispositif de commande et de gestion externe (90) s'il est établi que l'abonné WLAN demandeur de service (32) n'a pas été déconnecté du dispositif d'interface (60), **en ce qu'**en réponse à l'identifiant individuel il est vérifié dans le dispositif de commande et de gestion externe (90) si un droit d'accès a déjà été conféré à l'abonné WLAN demandeur de service, et **en ce qu'**une connexion par l'intermédiaire du réseau TCP-IP (80) est établie si l'abonné WLAN possède un droit d'accès au réseau TCP-IP.

5. Procédé selon la revendication 4, **caractérisé en ce qu'**il est demandé à l'abonné WLAN (32) de saisir ses données d'authentification si aucun droit d'accès ne lui a encore été conféré, et **en ce que** l'abonné WLAN (32) obtient un droit d'accès au réseau TCP-IP (80) après la saisie des données d'authentification.

6. Procédé selon la revendication 3 ou 5, **caractérisé en ce qu'**il est vérifié dans le dispositif de commande et de gestion externe (90) si l'abonné WLAN demandeur de service est en droit d'utiliser le réseau TCP-IP et/ou le service demandé.

7. Procédé selon l'une quelconque des revendications 1 à 6, **caractérisé en ce que** l'identifiant et/ou le propriétaire de chaque réseau local radio et/ou l'adresse des dispositifs d'interface (60 ; 70) associés à chaque réseau local (12 ; 52) sont mémorisés dans le dispositif de commande et de gestion externe (90).

8. Procédé selon la revendication 7, **caractérisé en ce qu'**une page Web individuelle qui peut être communiquée à un abonné WLAN demandeur de service pour au moins un réseau local et/ou au moins un abonné WLAN est stockée dans le dispositif de commande et de gestion externe.

9. Procédé selon la revendication 8, **caractérisé en ce qu'**un abonné WLAN demandeur de service (32) peut s'enregistrer au moyen d'une page Web communiquée au dispositif d'interface (60) d'un réseau local radio (12) dans la zone de desserte duquel il se trouve, afin d'obtenir un droit d'accès au réseau TCP-IP public.

10. Procédé selon l'une quelconque des revendications 7 à 9, **caractérisé en ce qu'**une table dans laquelle l'identifiant et/ou le propriétaire du réseau local radio (12) et/ou l'adresse du dispositif d'interface (60) associé au réseau local sur lequel l'abonné WLAN (32) est instantanément enregistré est alloué à chaque abonné WLAN demandeur de service (32) auquel a été conféré un droit d'accès, est gérée dans le dispositif de commande et de gestion externe (90).

11. Procédé selon l'une quelconque des revendications 2 à 10, **caractérisé en ce qu'**il est établi si l'abonné WLAN demandeur de service dispose d'un crédit et **en ce que** si cela est le cas, une connexion établie est déconnectée ou aucune connexion n'est établie si le crédit a été épuisé.

12. Système constitué d'une pluralité de réseaux de communication, notamment pour la mise en oeuvre du procédé selon l'une quelconque des revendications 1 à 10, comportant au moins un réseau local (12 ; 52), qui est connecté par l'intermédiaire d'au moins un dispositif d'interface (60 ; 70) à un réseau TCP-IP public (80), au moins un abonné WLAN (32) et un dispositif de commande et de gestion (90) associé au réseau TCP-IP public (80), dans lequel les dispositifs d'interface (60, 70) et le dispositif de commande et de gestion (90) comprennent des dispositifs destinés à échanger des données de signalisation et/ou d'information par l'intermédiaire du réseau TCP-IP public, dans lequel le dispositif d'interface (60, 70) et/ou le dispositif de commande et de gestion (90) comprennent respectivement un dispositif de vérification (120) destiné à vérifier le droit d'accès d'un abonné WLAN demandeur de service (32) au réseau TCP-IP public, et dans lequel le dispositif de commande et de gestion (90) comprend un dispositif destiné à commander l'établissement d'une connexion par l'intermédiaire du réseau TCP-IP public à l'abonné WLAN demandeur de service, en fonction du fait que l'abonné WLAN possède un droit d'accès au réseau TCP-IP, **caractérisé en ce que**
le dispositif de commande et de gestion (90) comprend un dispositif (140) destiné à détecter le taux d'utilisation d'au moins un réseau local radio (12, 52) et un dispositif de verrouillage, qui peut refuser au moins temporairement à un abonné WLAN demandeur de service le droit d'accéder au réseau TCP-IP en fonction du taux d'utilisation.

13. Système constitué d'une pluralité de réseaux de communication selon la revendication 12, **caractérisé en ce que** les données de signalisation contiennent des données de facturation et **en ce que** le dispositif de commande et de gestion (90) comprend un dispositif (120) destiné à générer des enregistrements de données de facturation à partir des données de facturation et un dispositif destiné à transférer les enregistrements de données de facturation à une unité de facturation (130) .

14. Système constitué d'une pluralité de réseaux de communication selon la revendication 12, **caractérisé en ce que** le dispositif d'interface (60, 70) comprend un dispositif destiné à transmettre au moins un identifiant individuel, notamment l'adresse MAC et/ou l'adresse IP, d'un abonné WLAN demandeur de service au dispositif de commande et de gestion externe (90), dans lequel le dispositif de vérification (120, 140) du dispositif de commande et de gestion (90) peut vérifier en réponse à l'identifiant individuel si un droit d'accès a déjà été conféré à l'abonné WLAN demandeur de service.

15. Système constitué d'une pluralité de réseaux de communication selon l'une quelconque des revendications 12 à 14, **caractérisé en ce que** le dispositif de commande et de gestion (90) comprend un dispositif (112, 114, 116) destiné à mémoriser une page Web individuelle pour au moins un réseau local (12, 52) et/ou pour au moins un abonné WLAN (32) ainsi qu'un dispositif destiné à communiquer une page Web à un abonné WLAN demandeur de service.

16. Système constitué d'une pluralité de réseaux de communication selon l'une quelconque des revendications 12 à 15, **caractérisé en ce qu'**un dispositif (150, 155) destiné à vérifier l'autorisation d'un abonné WLAN demandeur de service est associé au dispositif de vérification (120) du dispositif de commande et de gestion (90).

17. Système constitué d'une pluralité de réseaux de communication selon l'une quelconque des revendications 12 à 16, **caractérisé en ce que** le dispositif de commande et de gestion (90) comprend un dispositif destiné à stocker l'identifiant et/ou le propriétaire d'un réseau local radio et/ou l'adresse des dispositifs d'interface associés au réseau local ainsi qu'un dispositif (140) destiné à gérer une table, dans laquelle l'identifiant et/ou le propriétaire du réseau local radio et/ou l'adresse du dispositif d'interface (60, 70) associé au réseau local sur lequel l'abonné WLAN (32) est instantanément enregistré, est alloué à chaque abonné WLAN demandeur de service auquel a été conféré un droit d'accès.

18. Système constitué d'une pluralité de réseaux de communication selon l'une quelconque des revendications 12 à 17, **caractérisé en ce que** le dispositif de commande et de gestion (90) comprend un dispositif (180, 210) destiné à déterminer le type de paiement d'un abonné WLAN demandeur de service (32).

19. Système constitué d'une pluralité de réseaux de communication selon l'une quelconque des revendications 12 à 18, **caractérisé en ce que** le dispositif d'interface (60, 70) est conçu pour transmettre des données de facturation.

20. Système constitué d'une pluralité de réseaux de communication selon l'une quelconque des revendications 12 à 19, **caractérisé en ce que** les dispositifs du dispositif de commande et de gestion (90) sont répartis sur une pluralité d'ordinateurs (112, 114, 116, 120, 125, 130) formant un réseau d'ordinateurs.

21. Système constitué d'une pluralité de réseaux de communication selon la revendication 20, **caractérisé en ce que** le dispositif de commande et de gestion (90) comprend un dispositif destiné à surveiller et à gérer les ordinateurs et la répartition des dispositifs du dispositif de commande et de gestion sur les ordinateurs.

22. Système constitué d'une pluralité de réseaux de communication selon la revendication 20 ou 21, **caractérisé par** au moins un premier ordinateur (120) dans lequel sont mis en oeuvre le dispositif de vérification, le dispositif destiné à générer des enregistrements de données de facturation, le dispositif destiné à détecter le taux d'utilisation d'au moins un réseau local radio, le dispositif de verrouillage et le dispositif destiné à déterminer le type de paiement, au moins un deuxième ordinateur (112, 114, 116) dans lequel sont mis en oeuvre le dispositif destiné à stocker des interfaces utilisateur individuelles et le dispositif destiné à communiquer une interface utilisateur à un abonné WLAN demandeur de service, et au moins un troisième ordinateur (130) dans lequel est mise en oeuvre l'unité de facturation.

23. Dispositif de commande et de gestion (90) destiné à être utilisé un système constitué d'une pluralité de réseaux de communication (12, 52, 80) selon l'une quelconque des revendications 12 à 22, comportant des dispositifs (112, 114, 116, 120) destinés à échanger des données de signalisation et/ou d'information avec un dispositif d'interface (60 ; 70) d'un réseau local radio (12 ; 52), lesquels dispositifs sont connectés les uns aux autres par l'intermédiaire d'un réseau TCP-IP public (80), un dispositif de vérification (120, 140, 190, 200, 210) destiné à vérifier le droit d'accès d'un abonné WLAN demandeur de service (32) au réseau TCP-IP public (80), et un dispositif destiné à commander l'établissement d'une connexion par l'intermédiaire du réseau TCP-IP public à l'abonné WLAN demandeur de service, en fonction du fait que l'abonné WLAN (32) possède un droit d'accès au réseau TCP-IP (80),
**caractérisé par** un dispositif (140) destiné à détecter le taux d'utilisation d'au moins un réseau local radio (12 ; 52) et un dispositif de verrouillage, qui peuvent refuser au moins temporairement à un abonné WLAN demandeur de service le droit d'accéder au réseau TCP-IP (80) en fonction du taux d'utilisation.

24. Dispositif de commande et de gestion selon la revendication 23, **caractérisé par** un dispositif (120) destiné à générer des enregistrements de données de facturation et par un dispositif destiné à transférer les enregistrements de données de facturation à une unité de facturation (130).

25. Dispositif de commande et de gestion selon la revendication 23 ou 24, **caractérisé en ce que** le dispositif de vérification (120, 140) peut vérifier en réponse à un identifiant individuel d'un abonné WLAN demandeur de service si un droit d'accès a déjà été conféré à l'abonné WLAN demandeur de service.

26. Dispositif de commande et de gestion selon l'une quelconque des revendications 23 à 25, **caractérisé en ce que** le dispositif de vérification est réalisé sous la forme d'un dispositif (150, 155) destiné à vérifier l'autorisation d'un abonné WLAN demandeur de service.

27. Dispositif de commande et de gestion selon l'une quelconque des revendications 23 à 26, **caractérisé par** un dispositif (160) destiné à mémoriser l'identifiant et/ou le propriétaire d'un réseau local radio (12, 52) et/ou l'adresse des dispositifs d'interface associés au réseau local et par un dispositif (140) destiné à gérer une table dans laquelle l'identifiant et/ou le propriétaire du réseau local radio (12 ; 52) et/ou l'adresse du dispositif d'interface (60 ; 70) associé au réseau local sur lequel l'abonné WLAN est instantanément enregistré est alloué à chaque abonné WLAN demandeur de service (32) auquel a été conféré un droit d'accès.

28. Dispositif de commande et de gestion selon l'une quelconque des revendications 23 à 27, **caractérisé par** un dispositif (180, 210) destiné à déterminer le type de paiement d'un abonné WLAN demandeur de service.

29. Dispositif de commande et de gestion selon l'une quelconque des revendications 23 à 28, **caractérisé en ce que** le dispositif de commande et de gestion contient une pluralité d'ordinateurs (112, 114, 116, 120, 125, 130) formant un réseau d'ordinateurs dans lesquels les dispositifs individuels sont mis en oeuvre de manière prédéterminée.

30. Dispositif de commande et de gestion selon la revendication 29, **caractérisé par** un dispositif destiné à surveiller et à gérer les ordinateurs et l'affectation des dispositifs aux ordinateurs.
